# EUROPEAN PATENT APPLICATION

(11) **EP 4 730 531 A1**
(43) Date of publication of application: **22.04.2026**
(21) Application number: 23941270.3
(22) Date of filing: 19.10.2023
(51) Int. Cl.: H01M 50/325, H01M 50/358, H01M 50/30

(54) **BATTERY CELL, BATTERY AND ELECTRICAL DEVICE**

(30) Priority: 16.06.2023 CN 202310726909
(71) Applicant: Contemporary Amperex Technology Co., Limited, Ningde, Fujian 352100 (CN)
(72) Inventor: WU, Kai, Ningde, Fujian 352100 (CN); XING, Chengyou, Ningde, Fujian 352100 (CN); CHEN, Xinxiang, Ningde, Fujian 352100 (CN); LI, Quankun, Ningde, Fujian 352100 (CN); WANG, Peng, Ningde, Fujian 352100 (CN); ZHENG, Yulian, Ningde, Fujian 352100 (CN); JIN, Haizu, Ningde, Fujian 352100 (CN)
(74) Representative: Gong, Jinping
(86) International application number: PCT/CN2023/125422
(87) International publication number: WO 2024/255046

(57) **Abstract**

This application provides a battery cell, a battery, and an electric apparatus, pertaining to the field of battery technologies. The battery cell includes a housing, an electrode assembly, a one-way valve, and a cover member. The housing has a wall portion, the electrode assembly is accommodated within the housing, and the one-way valve is disposed on the wall portion. The one-way valve has an exhaust port, and the exhaust port is configured to discharge gas from inside the housing. The cover member is mounted on the wall portion. Along a thickness direction of the wall portion, the cover member is located on a side of the one-way valve facing away from the electrode assembly, and the cover member covers the one-way valve. An exhaust passage is formed between the cover member and the wall portion, and the exhaust passage communicates the exhaust port to an exterior of the housing. The cover member can protect and shield the one-way valve, reducing wear or damage to the one-way valve, lowering the risk of impurities from the external environment entering the one-way valve, enhancing the aesthetic appearance of the outer surface of the battery cell, and facilitating the connection of a detection component and another part on a side of the cover member facing away from the one-way valve.

## Description

### CROSS-REFERENCE TO RELATED APPLICATIONS

This application claims priority to Chinese Patent Application No. 2023107269094, filed on June 16, 2023, entitled "BATTERY CELL, BATTERY, AND ELECTRIC APPARATUS", the entire contents of which are incorporated herein by reference.

### TECHNICAL FIELD

This application relates to the field of battery technologies, and more particularly, to a battery cell, a battery, and an electric apparatus.

### BACKGROUND

In recent years, new energy vehicles have experienced rapid development. In the field of electric vehicles, power batteries, as the power source of electric vehicles, play an irreplaceable and significant role. With the widespread promotion of new energy vehicles, the demand for power battery products is increasing. Batteries, as core components of new energy vehicles, are required to have both high use reliability and service life.

In battery technologies, to ensure the safety of a battery cell, a pressure relief mechanism is typically provided on a housing of the battery cell to release internal pressure of the battery cell, such that when the internal pressure or temperature of the battery cell reaches a threshold, the pressure relief mechanism can be actuated to release the internal pressure of the battery cell. However, pressure relief mechanisms of existing battery cells may prematurely actuate to release pressure during use, resulting in poor use stability of battery cells, which is not conducive to improving the service life and use reliability of battery cells.

### SUMMARY

Embodiments of this application provide a battery cell, a battery, and an electric apparatus, which can effectively enhance the service life and use reliability of the battery cell.

According to a first aspect, an embodiment of this application provides a battery cell, including a housing, an electrode assembly, a one-way valve, and a cover member. The housing has a wall portion, the electrode assembly is accommodated within the housing, and the one-way valve is disposed on the wall portion. The one-way valve has an exhaust port, and the exhaust port is configured to discharge gas from inside the housing. The cover member is mounted on the wall portion. Along a thickness direction of the wall portion, the cover member is located on a side of the one-way valve facing away from the electrode assembly, and the cover member covers the one-way valve. An exhaust passage is formed between the cover member and the wall portion, and the exhaust passage communicates the exhaust port to an exterior of the housing.

In the above technical solution, by providing the one-way valve on the wall portion of the housing, the one-way valve can open unidirectionally to discharge gas from inside the housing to the exterior of the housing, thereby allowing gas generated inside the housing during normal use of the battery cell to be discharged to the exterior of the housing through the one-way valve. This mitigates the phenomenon that the rise in the internal gas pressure of the battery cell makes the internal pressure of the battery cell reach a threshold prematurely, thereby effectively enhancing the use stability of the battery cell and improving the service life and use reliability of the battery cell. Additionally, by providing the cover member on the side of the one-way valve facing away from the electrode assembly, with the cover member covering the one-way valve, the cover member can provide a certain degree of protection and shielding for the one-way valve. This can reduce wear or damage to the one-way valve in external environments and lower the risk of impurities or particles from the external environment entering the one-way valve, which is beneficial to improving the service life of the one-way valve. Furthermore, covering the one-way valve with the cover member can enhance the aesthetic appearance of the outer surface of the battery cell. Moreover, it facilitates a corresponding connection of a detection component or another part on the side of the cover member facing away from the one-way valve, reducing interference from the region of the wall portion where the one-way valve is disposed on the connection of the detection component or another part.

In some embodiments, along the thickness direction of the wall portion, the wall portion has a first surface facing away from the electrode assembly, the first surface is provided with a mounting groove, a groove bottom surface of the mounting groove is provided with a mounting hole, at least a portion of the one-way valve is disposed within the mounting hole, and at least a portion of the cover member is accommodated within the mounting groove.

In the above technical solution, by providing the mounting groove on the first surface of the wall portion facing away from the electrode assembly, with at least the portion of the cover member accommodated within the mounting groove, the space occupied by the cover member and the wall portion in the thickness direction of the wall portion can be reduced, which is beneficial to optimizing the volume of the battery cell. Additionally, the mounting groove can provide a certain degree of positioning and limiting for the cover member, which is beneficial to reducing the assembly difficulty of connecting the cover member to the wall portion.

In some embodiments, the exhaust passage includes a first exhaust gap, the first exhaust gap is formed between the cover member and a groove side surface of the mounting groove, and the first exhaust gap is configured to connect the exhaust port and the exterior of the housing.

In the above technical solution, by forming the first exhaust gap between the cover member and the groove side surface of the mounting groove, which communicates with the exterior of the housing, gas discharged from the one-way valve can be expelled to the exterior of the housing through the first exhaust gap. The battery cell of this structure can eliminate the need to form a hole in the cover member, which is beneficial to reducing processing difficulty and enhancing the aesthetic appearance of the battery cell.

In some embodiments, an outer peripheral surface of the cover member includes a first corner surface and at least two first side surfaces, and the first corner surface connects two adjacent first side surfaces; and the groove side surface of the mounting groove includes a second corner surface and at least two second side surfaces, the second corner surface connects two adjacent second side surfaces, each second side surface is connected to one first side surface, and the first exhaust gap is formed between the second corner surface and the first corner surface.

In the above technical solution, two adjacent first side surfaces on the outer peripheral surface of the cover member are connected by the first corner surface, and two adjacent second side surfaces on the groove side surface of the mounting groove are connected by the second corner surface. Each first side surface is connected to one second side surface, and the first gap is formed between the first corner surface and the second corner surface, meaning that the first exhaust gap is formed at the corners of the cover member and the mounting groove. This facilitates the formation of the first exhaust gap between the outer peripheral surface of the cover member and the groove side surface of the mounting groove, and is simple in design and easy to implement. Additionally, in addition to the formation of the first exhaust gap between the outer peripheral surface of the cover member and the groove side surface of the mounting groove, this facilitates to increasing the connection area between the outer peripheral surface of the cover member and the groove side surface of the mounting groove, which is beneficial to enhancing the firmness of the cover member's connection to the wall portion.

In some embodiments, the first corner surface and the second corner surface are both arcuate surfaces, and a radius of the first corner surface is greater than a radius of the second corner surface.

In the above technical solution, by configuring both the first corner surface and the second corner surface as arcuate surfaces, and the radius of the first corner surface being greater than the radius of the second corner surface, the first exhaust gap is formed between the first corner surface and the second corner surface. This structure is simple and easy to manufacture and process.

In some embodiments, the first side surface is welded to the second side surface.

In the above technical solution, configuring the first side surface and the second side surface as structures welded to each other helps to improve the connection firmness between the cover member and the groove side surface of the mounting groove, thereby improving the structural stability of the cover member assembled on the wall portion.

In some embodiments, a cross-section of the cover member perpendicular to the thickness direction of the wall portion is rectangular, the outer peripheral surface of the cover member includes four first side surfaces and four first corner surfaces, and the first exhaust gap is formed at at least one of the first corner surfaces.

In the above technical solution, by configuring the cover member as a rectangular plate-like structure, the four edges of the cover member form the four first side surfaces, and the four first corner surfaces are formed at four right angles of the cover member. This structure is simple and easy to manufacture.

In some embodiments, the outer peripheral surface of the cover member is provided with a groove, and the first exhaust gap is formed between a groove bottom surface of the groove and the groove side surface of the mounting groove.

In the above technical solution, by providing the groove on the outer peripheral surface of the cover member, the first exhaust gap for gas discharge is formed between the groove bottom surface of the groove and the groove side surface of the mounting groove. This structure is simple and easy to manufacture.

In some embodiments, a region of the outer peripheral surface of the cover member not provided with the groove is welded to the groove side surface of the mounting groove.

In the above technical solution, by welding the region of the outer peripheral surface of the cover member not provided with the groove to the groove side surface of the mounting groove, the cover member is connected to the groove side surface of the mounting groove. The battery cell of this structure facilitates the connection firmness between the cover member and the wall portion, improving the structural stability of the cover member assembled on the wall portion.

In some embodiments, the outer peripheral surface of the cover member is provided with a plurality of protrusions, the protrusions are spaced apart along a circumferential direction of the cover member, the protrusions abut against the groove side surface of the mounting groove, and the first exhaust gap is formed between a region of the outer peripheral surface of the cover member not provided with the protrusions and the groove side surface of the mounting groove.

In the above technical solution, by providing the plurality of protrusions spaced apart along the circumferential direction of the cover member on the outer peripheral surface of the cover member, with the protrusions abutting against the groove side surface of the mounting groove, the first exhaust gap for gas discharge is formed between the region of the outer peripheral surface of the cover member not provided with the protrusions and the groove side surface of the mounting groove, meaning that the first exhaust gap is located between two adjacent protrusions. This structure is simple and easy to assemble.

In some embodiments, the protrusions are in interference fit with the groove side surface of the mounting groove.

In the above technical solution, by making the protrusions provided on the outer peripheral surface of the cover member in interference fit with the groove side surface of the mounting groove, the cover member is fixed within the mounting groove. The battery cell of this structure forms the first exhaust gap between two adjacent protrusions while facilitating the installation of the cover member on the wall portion, helping to reduce the assembly difficulty of the cover member.

In some embodiments, the exhaust passage further includes a second exhaust gap, the second exhaust gap is formed between the cover member and the groove bottom surface of the mounting groove, and the second exhaust gap communicates the first exhaust gap to the exhaust port.

In the above technical solution, the exhaust passage further includes the second exhaust gap formed between the cover member and the groove bottom surface of the mounting groove, with the second exhaust gap communicating the first exhaust gap to the exhaust port. This mitigates the phenomenon of obstructed gas discharge between the exhaust port and the first exhaust gap caused by the cover member abutting against the groove bottom surface of the mounting groove, thereby improving the smoothness of gas discharge from the exhaust port of the one-way valve to the first exhaust gap.

In some embodiments, along the thickness direction of the wall portion, the cover member has a second surface facing towards the one-way valve, the second surface overlaps the groove bottom surface of the mounting groove, the second surface is provided with a first groove, and the second exhaust gap is formed between a groove bottom surface of the first groove and the groove bottom surface of the mounting groove.

In the above technical solution, by configuring the second surface of the cover member to overlap the groove bottom surface of the mounting groove, the cover member abuts against the groove bottom surface of the mounting groove, enhancing the structural stability and reliability of the cover member installed in the mounting groove. Additionally, by providing the first groove on the second surface, the second exhaust gap is formed between the groove bottom surface of the first groove and the groove bottom surface of the mounting groove, allowing gas discharged from the exhaust port of the one-way valve to enter the first exhaust gap through the first groove and then be discharged to the exterior of the housing. This enables the communication between the first exhaust gap and the exhaust port through the first groove while allowing the cover member to abut against the groove bottom surface of the mounting groove.

In some embodiments, a plurality of first exhaust gaps are formed between the cover member and the groove side surface of the mounting groove, the plurality of first exhaust gaps are spaced apart along a circumferential direction of the cover member, the second surface is provided with a plurality of first grooves, and each first exhaust gap is connected to one first groove.

In the above technical solution, forming the plurality of first exhaust gaps between the cover member and the groove side surface of the mounting groove, with each first exhaust gap communicated with one first groove, helps to further improve the exhaust efficiency.

In some embodiments, the second surface is further provided with a second groove, the plurality of first grooves are disposed around the second groove and communicate with the second groove, and the second groove communicates with the exhaust port.

In the above technical solution, by providing the second groove on the second surface of the cover member facing towards the one-way valve, with the second groove communicated to the exhaust port of the one-way valve, and the plurality of first grooves disposed around the second groove and communicated with the second groove, gas discharged from the exhaust port of the one-way valve can enter the second groove and then pass through the first grooves to the corresponding first exhaust gaps to be discharged to the exterior of the housing. This improves exhaust efficiency and can mitigate the accumulation of gas between the cover member and the one-way valve.

In some embodiments, along the thickness direction of the wall portion, the exhaust port is disposed at an end of the one-way valve facing away from the electrode assembly, the exhaust port is disposed facing towards the second groove, and a projection of the exhaust port is located within the second groove.

In the above technical solution, by configuring the exhaust port of the one-way valve and the second groove to face towards each other, with the projection of the exhaust port in the thickness direction of the wall portion located within the second groove, the second groove covers the exhaust port in the thickness direction of the wall portion, allowing gas discharged from the exhaust port of the one-way valve to directly enter the second groove, which is beneficial to improving exhaust smoothness and exhaust efficiency.

In some embodiments, along the thickness direction of the wall portion, the cover member does not extend beyond the first surface.

In the above technical solution, by configuring the cover member to not extend beyond the first surface of the wall portion facing away from the electrode assembly in the thickness direction of the wall portion, the mounting groove can provide a certain degree of protection to the cover member, further reducing wear on the cover member.

In some embodiments, the cover member has a third surface facing away from the one-way valve, the third surface being flush with the first surface.

In the above technical solution, configuring the third surface of the cover member facing away from the one-way valve to be flush with the first surface of the wall portion facing away from the electrode assembly helps to further improve the aesthetic appearance of the outer surface of the battery cell, and facilitates the provision of information code or the connection of a detection component or another part on the third surface of the cover member.

In some embodiments, along the thickness direction of the wall portion, the one-way valve does not extend beyond the groove bottom surface of the mounting groove.

In the above technical solution, by configuring the one-way valve to not extend beyond the groove bottom surface of the mounting groove in the thickness direction of the wall portion, meaning that the one-way valve disposed within the mounting hole does not extend into the mounting groove, interference between the one-way valve and the cover member disposed in the mounting groove can be reduced, and gas discharge by the one-way valve is facilitated.

In some embodiments, the cover member is fixedly connected to the wall portion.

In the above technical solution, configuring the cover member to be fixedly connected to the wall portion helps to reduce the risk of the cover member falling off the wall portion during use, and can improve the connection firmness between the cover member and the wall portion, facilitating the provision of information code or the connection of a detection component or another part on the cover member.

In some embodiments, the one-way valve includes a valve body, an elastic member, and a sealing member. The valve body is disposed on the wall portion, where a mounting cavity is formed in an interior of the valve body, the valve body is provided with an intake port and the exhaust port, the intake port is configured to communicate the mounting cavity to an interior of the housing, and the exhaust port is configured to communicate the mounting cavity to the exhaust passage. The elastic member is disposed within the mounting cavity. The sealing member is movably disposed within the mounting cavity, where the sealing member is configured to seal the intake port under the action of the elastic member and to open the intake port under the action of gas inside the housing.

In the above technical solution, the one-way valve is provided with the valve body, the elastic member, and the sealing member. The valve body is disposed on the wall portion, with the valve body provided with the intake port communicating the mounting cavity to the interior of the housing and the exhaust port connecting the mounting cavity and the exhaust passage. By disposing both the elastic member and the sealing member within the mounting cavity, the elastic member can apply an elastic force to the sealing member, enabling the sealing member to seal the intake port and prevent gas outside the housing from entering the interior of the housing. When the internal pressure of the housing rises, gas inside the housing can act on the sealing member and overcome the elastic force of the elastic member, allowing the sealing member to open the intake port, thereby enabling gas inside the housing to be discharged through the one-way valve's unidirectional opening, so as to achieve the one-way valve's unidirectional exhaust function.

In some embodiments, the valve body includes a valve main body and valve cover, where the valve main body is disposed on the wall portion, and the valve main body is provided with the intake port. Along the thickness direction of the wall portion, the valve cover is disposed at an end of the valve main body facing away from the electrode assembly, the valve cover and the valve main body together enclose to form the mounting cavity, and the valve cover is provided with the exhaust port.

In the above technical solution, the valve body of the one-way valve includes the valve main body and the valve cover. By connecting the valve cover to the end of the valve main body facing away from the electrode assembly in the thickness direction of the wall portion, the valve cover and the valve main body together define the mounting cavity for accommodating the elastic member and the sealing member. The one-way valve of this structure divides the valve body into two parts, facilitating the assembly of the elastic member and the sealing member into the mounting cavity, which is beneficial to reducing the assembly difficulty of the one-way valve.

In some embodiments, along the thickness direction of the wall portion, the valve cover and the sealing member are spaced apart, two ends of the elastic member respectively abut against the valve cover and the sealing member, and the intake port is disposed on a cavity bottom surface of the mounting cavity.

In the above technical solution, by configuring the valve cover and the sealing member to be spaced apart along the thickness direction of the wall portion, the two ends of the elastic member can respectively abut against the valve cover and the sealing member, enabling the sealing member to seal the intake port disposed on the cavity bottom surface of the mounting cavity along the thickness direction of the wall portion under the action of the elastic member. In other words, the intake port is disposed at the end of the valve main body facing towards the electrode assembly in the thickness direction of the wall portion, and the sealing member can move along the thickness direction of the wall portion under the action of the elastic member to seal the intake port. The one-way valve of this structure facilitates the elastic member applying an elastic force to the sealing member to allow the sealing member to seal the intake port and can reduce the assembly difficulty of the elastic member.

In some embodiments, along the thickness direction of the wall portion, the mounting cavity extends through an end of the valve body facing away from the electrode assembly to form the exhaust port, and the cover member faces towards the exhaust port.

In the above technical solution, by configuring the mounting cavity to extend through the end of the valve body facing away from the electrode assembly in the thickness direction of the wall portion, to form the exhaust port at the end of the valve body facing away from the electrode assembly, with the cover member covering the exhaust port, the one-way valve of this structure facilitates the assembly of the elastic member and the sealing member into the mounting cavity through the intake port, which is beneficial to reducing the assembly difficulty of the one-way valve.

In some embodiments, along the thickness direction of the wall portion, the cover member and the sealing member are spaced apart, two ends of the elastic member respectively abut against the cover member and the sealing member, and the intake port is disposed on a cavity bottom surface of the mounting cavity.

In the above technical solution, by configuring the cover member and the sealing member to be spaced apart along the thickness direction of the wall portion, the two ends of the elastic member can respectively abut against the cover member and the sealing member, enabling the sealing member to seal the intake port disposed on the cavity bottom surface of the mounting cavity along the thickness direction of the wall portion under the action of the elastic member. In other words, the intake port is disposed at the end of the valve main body facing towards the electrode assembly in the thickness direction of the wall portion, and the sealing member can move along the thickness direction of the wall portion under the action of the elastic member to seal the intake port. The one-way valve of this structure facilitates the elastic member applying an elastic force to the sealing member to allow the sealing member to seal the intake port and can reduce the assembly difficulty of the elastic member.

In some embodiments, a material of the cover member is the same as a material of the wall portion.

In the above technical solution, configuring the cover member and the wall portion to be made of the same material facilitates the assembly of the cover member and the wall portion made of the same material, which is beneficial to reducing the assembly difficulty of disposing the cover member on the wall portion; and additionally, can allow the cover member and the wall portion to have the same appearance, which is beneficial to enhancing the aesthetic appearance of the battery cell.

In some embodiments, the housing includes a housing body and an end cap. A receiving cavity with an opening is formed inside the housing body, and the receiving cavity is configured to accommodate the electrode assembly. The end cap closes the opening. The end cap is the wall portion; or the housing body includes the wall portion.

In the above technical solution, by configuring the wall portion of the housing as the end cap of the housing that closes the opening of the housing body, the battery cell of this structure facilitates the installation of the one-way valve and the cover member on the end cap, which is beneficial to reducing the assembly difficulty of the battery cell and improving the production efficiency of the battery cell. Similarly, by configuring the wall portion of the housing as one wall of the housing body, the battery cell of this structure can reduce the impact of stresses generated by the connection between the end cap and the housing body on the one-way valve and the cover member, mitigating phenomena such as damage to the one-way valve or failure of the cover member's connection, thereby enhancing the use stability and service life of the battery cell.

According to a second aspect, an embodiment of this application further provides a battery including the battery cell described above.

According to a third aspect, an embodiment of this application further provides an electric apparatus including the battery cell described above, where the battery cell is configured to provide electrical energy.

### BRIEF DESCRIPTION OF DRAWINGS

To more clearly illustrate the technical solutions of the embodiments of this application, the drawings required for use in the embodiments are briefly described below. It should be understood that the following drawings illustrate only certain embodiments of this application and should not be considered as limiting the scope. For those skilled in the art, other related drawings can be obtained based on these drawings without creative effort.
FIG. 1 is a schematic structural diagram of a vehicle according to some embodiments of this application.
FIG. 2 is an exploded structural diagram of a battery according to some embodiments of this application.
FIG. 3 is a schematic structural diagram of a battery cell according to some embodiments of this application.
FIG. 4 is an exploded structural diagram of a battery cell according to some embodiments of this application.
FIG. 5 is a partial cross-sectional view of a battery cell according to some embodiments of this application.
FIG. 6 is a schematic structural diagram of a one-way valve according to some embodiments of this application.
FIG. 7 is a top view of a battery cell according to some embodiments of this application.
FIG. 8 is a partial enlarged view of portion A of the battery cell shown in FIG. 7.
FIG. 9 is a schematic structural diagram of a cover member according to some embodiments of this application.
FIG. 10 is a schematic structural diagram of a cover member according to some other embodiments of this application.
FIG. 11 is a schematic structural diagram of a cover member according to some further embodiments of this application.
FIG. 12 is a bottom view of a cover member according to some embodiments of this application.
FIG. 13 is an exploded structural diagram of a one-way valve according to some embodiments of this application.
FIG. 14 is a cross-sectional view of a one-way valve according to some embodiments of this application.
FIG. 15 is a partial cross-sectional view of a battery cell according to some other embodiments of this application.
FIG. 16 is a partial cross-sectional view of a wall portion of a housing of a battery cell according to some embodiments of this application.
FIG. 17 is a partial cross-sectional view of an insulating member according to some embodiments of this application.

Reference signs: 1000. vehicle; 100. battery; 10. box; 11. first box body; 12. second box body; 20. battery cell; 21. housing; 211. wall portion; 2111. mounting hole; 2111a. first hole segment; 2111b. second hole segment; 2112. first surface; 2113. mounting groove; 2113a. second corner surface; 2113b. second side surface; 212. housing body; 2121. opening; 213. end cap; 22. electrode assembly; 221. tab; 23. one-way valve; 231. exhaust port; 232. valve body; 2321. mounting cavity; 2322. intake port; 2323. valve main body; 2323a. counterbore; 2323b. connection portion; 2323c. stress relief groove; 2324. valve cover; 2324a. first guide post; 233. elastic member; 234. sealing member; 2341. second guide post; 2342. pressing portion; 2342a. snap-fit groove; 2343. sealing portion; 2343a. snap-fit portion; 24. cover member; 241. first corner surface; 242. first side surface; 243. groove; 244. protrusion; 245. second surface; 2451. first groove; 2452. second groove; 246. third surface; 25. exhaust passage; 251. first exhaust gap; 252. second exhaust gap; 26. electrode terminal; 27. pressure relief mechanism; 28. insulating member; 281. main body portion; 282. receiving portion; 2821. second through hole; 2822. first wall; 2823. second wall; 200. controller; 300. motor; and X. thickness direction of wall portion.

### DESCRIPTION OF EMBODIMENTS

To make the objectives, technical solutions, and advantages of the embodiments of this application clearer, the technical solutions in the embodiments of this application are described clearly below in conjunction with the drawings in the embodiments of this application. It is apparent that the described embodiments are some, but not all, embodiments of this application. Based on the embodiments in this application, all other embodiments obtained by those skilled in the art without creative effort fall within the protection scope of this application.

Unless otherwise defined, all technical and scientific terms used in this application have the same meaning as commonly understood by those skilled in the technical field of this application; terms used in the specification of this application are for the purpose of describing specific embodiments only and are not intended to limit this application; the terms "including" and "having" in the specification, claims, and the above description of the drawings of this application, as well as any variations thereof, are intended to cover non-exclusive inclusion. The terms "first," "second," and the like in the specification, claims, or the above description of the drawings of this application are used to distinguish different objects and not to describe a specific order or primary-secondary relationship.

Reference to "embodiment" in this application means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments.

In the description of this application, it should be noted that, unless otherwise explicitly specified and limited, the terms "mounted," "connected," "connection," and "attached" should be understood in a broad sense, for example, as a fixed connection, a detachable connection, or an integral connection; a direct connection, an indirect connection through an intermediary, or an internal communication between two components. For those skilled in the art, the specific meanings of the above terms in this application can be understood based on specific circumstances.

The term "and/or" in this application is merely an associative relationship describing associated objects, indicating that three relationships may exist. For example, A and/or B may indicate: A alone, both A and B, or B alone. Additionally, the character "/" in this application generally indicates an "or" relationship between the associated objects.

In the embodiments of this application, identical reference signs denote identical components, and for brevity, detailed descriptions of identical components are omitted in different embodiments. It should be understood that the thickness, length, width, and other dimensions of various components in the embodiments of this application shown in the drawings, as well as the overall thickness, length, width, and other dimensions of an integrated device, are for illustrative purposes only and should not constitute any limitation on this application.

The term "plurality" appearing in this application refers to two or more (including two).

In the embodiments of this application, the battery cell may be a secondary battery, which refers to a battery cell that can be recharged to activate the active material and continue to be used after the battery cell is discharged.

The battery cell may be a lithium-ion battery, sodium-ion battery, sodium-lithium-ion battery, lithium metal battery, sodium metal battery, lithium-sulfur battery, magnesium-ion battery, nickel-hydrogen battery, nickelcadmium battery, lead-acid battery, and the like, and the embodiments of this application are not limited thereto.

The battery cell generally includes an electrode assembly. The electrode assembly includes a positive electrode, a negative electrode, and a separator. During charging and discharging of the battery cell, active ions (for example, lithium ions) intercalate and deintercalate back and forth between the positive electrode and the negative electrode. The separator is disposed between the positive electrode and the negative electrode, preventing short circuits between the positive and negative electrodes while allowing active ions to pass through.

In some embodiments, the positive electrode may be a positive electrode plate, which may include a positive electrode current collector and a positive electrode active material disposed on at least one surface of the positive electrode current collector.

As an example, the positive electrode current collector has two surfaces opposite in its thickness direction, and the positive electrode active material is disposed on either or both of the two opposite surfaces of the positive electrode current collector.

As an example, the positive electrode current collector may be a metal foil or a composite current collector. For example, as a metal foil, silver-plated aluminum, silver-plated stainless steel, stainless steel, copper, aluminum, nickel, carbon electrode, carbon, nickel, or titanium may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and their respective modified compounds. However, this application is not limited to these materials, and other conventional materials that can be used as positive electrode active materials for batteries may also be used. These positive electrode active materials may be used alone or in combination of two or more. Examples of lithium-containing phosphates may include, but are not limited to, at least one of lithium iron phosphate (for example, LiFePO₄ (also abbreviated as LFP)), a composite of lithium iron phosphate and carbon, lithium manganese phosphate (for example, LiMnPO₄), a composite of lithium manganese phosphate and carbon, lithium iron manganese phosphate, and a composite of lithium iron manganese phosphate and carbon. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂, or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (for example, LiNi_{0.85}Co_{0.15}Al_{0.05}O₂), and modified compounds thereof.

In some embodiments, the positive electrode may be a metal foam. The metal foam may be nickel foam, copper foam, aluminum foam, alloy foam, or carbon foam. When metal foam is used as the positive electrode, the surface of the metal foam may not be provided with a positive electrode active material, or certainly, may be provided with a positive electrode active material. As an example, lithium source material, potassium metal, or sodium metal may be filled and/or deposited within the metal foam, where the lithium source material is lithium metal and/or lithium-rich material.

In some embodiments, the negative electrode may be a negative electrode plate, which may include a negative electrode current collector.

As an example, the negative electrode current collector may be a metal foil, a metal foam, or a composite current collector. For example, as a metal foil, silver-plated aluminum or stainless steel, stainless steel, copper, aluminum, nickel, carbon electrode, carbon, nickel, or titanium may be used. The metal foam may be nickel foam, copper foam, aluminum foam, alloy foam, or carbon foam. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

As an example, the negative electrode plate may include a negative electrode current collector and a negative electrode active material disposed on at least one surface of the negative electrode current collector.

As an example, the negative electrode current collector has two surfaces opposite in its thickness direction, and the negative electrode active material is disposed on either or both of the two opposite surfaces of the negative electrode current collector.

As an example, the negative electrode active material may be a known negative electrode active material for battery cells. As an example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon oxide compound, silicon-carbon composite, silicon-nitrogen composite, and silicon alloy. The tin-based material may be selected from at least one of elemental tin, tin oxide compound, and tin alloy. However, this application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly further includes a separator disposed between the positive electrode and the negative electrode.

In some embodiments, the separator is a separator film. The separator film may be of various types and may be any known porous structure separator film with good chemical and mechanical stability.

As an example, the material of the separator film may include at least one of glass fiber, non-woven fabric, polyethylene, polypropylene, and polyvinylidene fluoride. The separator film may be a single-layer film or a multilayer composite film. When the separator film is a multilayer composite film, the materials of each layer may be the same or different. The separator may be a separate component located between the positive and negative electrodes or may be attached to the surface of the positive or negative electrode.

In some embodiments, the separator is a solid-state electrolyte. The solid-state electrolyte is disposed between the positive electrode and the negative electrode, serving both to conduct ions and to isolate the positive and negative electrodes.

In some embodiments, the battery cell further includes an electrolyte, which conducts ions between the positive and negative electrodes. The electrolyte may be liquid, gel, or solid. The liquid electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether-based solvent. The ether-based solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a polymer as the skeleton network of the electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, and the like.

As an example, the inorganic solid-state electrolyte may include one or more of oxide solid electrolytes (crystalline perovskite, sodium superionic conductor, garnet, or amorphous LiPON film), sulfide solid electrolytes (crystalline lithium superionic conductor (lithium germanium phosphorus sulfide, or argyrodite), or amorphous sulfide), halide solid electrolytes, nitride solid electrolytes, and hydride solid electrolytes.

As an example, the composite solid-state electrolyte is formed by adding inorganic solid-state electrolyte fillers to a polymer solid electrolyte.

In some embodiments, the electrode assembly is a wound structure. The positive electrode plate and the negative electrode plate are wound into a wound structure.

In some embodiments, the electrode assembly is a stacked structure.

As an example, a plurality of positive electrode plates and a plurality of negative electrode plates may be alternately stacked.

As an example, a plurality of positive electrode plates may be provided, and the negative electrode plate may be folded to form a plurality of stacked folding segments, with a positive electrode plate sandwiched between adjacent folding segments.

As an example, both the positive electrode plate and the negative electrode plate may be folded to form a plurality of stacked folding segments.

As an example, a plurality of separators may be provided, each disposed between any adjacent positive electrode plate or negative electrode plate.

As an example, the separator may be continuously disposed, arranged between any adjacent positive electrode plate or negative electrode plate by folding or winding.

In some embodiments, the shape of the electrode assembly may be cylindrical, flat, or prismatic.

In some embodiments, the electrode assembly is provided with tabs, which can conduct current from the electrode assembly. The tabs include a positive tab and a negative tab.

In some embodiments, the battery cell may include a housing. The housing is configured to encapsulate components such as the electrode assembly and the electrolyte. The housing may be a steel shell, aluminum shell, plastic shell (for example, polypropylene), composite metal shell (for example, copper-aluminum composite housing), or aluminum-plastic film.

As an example, the battery cell may be a cylindrical battery cell, a prismatic battery cell, a pouch battery cell, or a battery cell of other shapes. Prismatic battery cells include, but are not limited to, square-shell battery cells, blade-shaped battery cells, and polygonal prismatic batteries. For example, the polygonal prismatic batteries are hexagonal prismatic batteries.

The battery mentioned in the embodiments of this application refers to a single physical module including one or more battery cells to provide higher voltage and capacity.

In some embodiments, the battery may be a battery module, and when there are multiple battery cells, the multiple battery cells are arranged and fixed to form a battery module.

In some embodiments, the battery may be a battery pack, including a box and battery cells, with the battery cells or battery modules accommodated in the box.

In some embodiments, the box may be part of a vehicle's chassis structure. For example, a portion of the box may form at least part of the vehicle's floor, or a portion of the box may form at least part of the vehicle's crossbeams and longitudinal beams.

In some embodiments, the battery may be an energy storage device. The energy storage device includes an energy storage container, an energy storage cabinet, and the like.

Batteries have significant advantages such as high energy density, low environmental pollution, high power density, long service life, wide adaptability, and low self-discharge coefficient, making them an important part of new energy development. The development of battery technology must consider multiple design factors, such as energy density, cycle life, discharge capacity, charge-discharge rate, and other performance parameters, as well as battery safety. With the rapid development and increasing demand for batteries, the requirements for battery service life and use reliability are also rising.

In battery technologies, for general battery cells, to ensure use safety of battery cells, a pressure relief mechanism is typically provided on a housing of a battery cell to release internal pressure of the battery cell through the pressure relief mechanism, thereby effectively enhancing the use safety of the battery cell. In related technologies, a certain amount of gas is generated during the use of a battery cell, causing the gas pressure inside a housing of the battery cell to rise, which may lead to premature actuation of a pressure relief mechanism of the battery cell during use to release pressure, resulting in poor use stability of the battery cell and being detrimental to improving the service life and use reliability of the battery cell.

Based on the above considerations, to address the issues of short service life and low use reliability of battery cells, embodiments of this application provide a battery cell. The battery cell includes a housing, an electrode assembly, a one-way valve, and a cover member. The housing has a wall portion, the electrode assembly is accommodated within the housing, and the one-way valve is disposed on the wall portion. The one-way valve has an exhaust port, and the exhaust port is configured to discharge gas from inside the housing. The cover member is mounted on the wall portion, and along a thickness direction of the wall portion. The cover member is located on a side of the one-way valve facing away from the electrode assembly and the cover member covers the one-way valve. An exhaust passage is formed between the cover member and the wall portion, and the exhaust passage communicates the exhaust port to an exterior of the housing.

In the battery cell of this structure, by providing the one-way valve on the wall portion of the housing, the one-way valve can open unidirectionally to discharge gas from inside the housing to the exterior of the housing, thereby allowing gas generated inside the housing during normal use of the battery cell to be discharged to the exterior of the housing through the one-way valve. This mitigates the phenomenon that the rise in the internal gas pressure of the battery cell makes the internal pressure of the battery cell reach a threshold prematurely, which causes premature actuation of the battery cell to release pressure, thereby effectively enhancing the use stability of the battery cell and improving the service life and use reliability of the battery cell.

Additionally, by providing the cover member on the side of the one-way valve facing away from the electrode assembly, with the cover member covering the one-way valve, the cover member can provide a certain degree of protection and shielding for the one-way valve. This can reduce wear or damage to the one-way valve in external environments and lower the risk of impurities or particles from the external environment entering the one-way valve, which is beneficial to improving the service life of the one-way valve. Furthermore, covering the one-way valve with the cover member can enhance the aesthetic appearance of the outer surface of the battery cell. Moreover, it facilitates a corresponding connection of a detection component or another part on the side of the cover member facing away from the one-way valve, reducing interference from the region of the wall portion where the one-way valve is disposed on the connection of the detection component or another part.

The battery cell disclosed in the embodiments of this application can be used, but is not limited to, in electric apparatuses such as vehicles, ships, or aircraft, as well as in energy storage devices. A power supply system for such electric apparatuses can be formed using the battery cells, batteries, and the like, disclosed in this application, which helps mitigate premature valve opening and pressure relief during use of the battery cell, thereby improving the service life and use reliability of the battery cell.

Embodiments of this application provide an electric apparatus using a battery as a power source, and the electric apparatus may include, but is not limited to, a mobile phone, tablet, laptop, electric toy, electric tool, electric bicycle, electric vehicle, ship, spacecraft, and the like. Electric toys may include fixed or mobile electric toys, such as game consoles, electric car toys, electric ship toys, and electric airplane toys. Spacecraft may include airplanes, rockets, space shuttles, and spaceships.

For convenience of description, the following embodiments take a vehicle as an example of an electric apparatus according to an embodiment of this application.

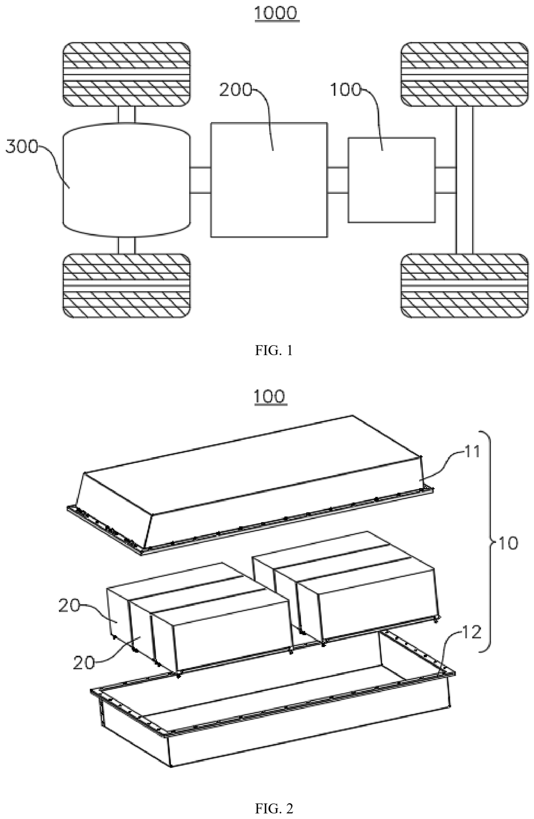

Referring to FIG. 1, FIG. 1 is a schematic structural diagram of a vehicle 1000 according to some embodiments of this application. The vehicle 1000 may be a fuel vehicle, a gas vehicle, or a new energy vehicle, where the new energy vehicle may be a pure electric vehicle, a hybrid vehicle, or an extended-range vehicle. A battery 100 is provided inside the vehicle 1000, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, for the power requirements of starting, navigation, and driving the vehicle 1000.

In some embodiments of this application, the battery 100 may not only serve as an operational power source for the vehicle 1000 but also as a driving power source for the vehicle 1000, replacing or partially replacing fuel or natural gas to provide driving power for the vehicle 1000.

Referring to FIG. 2, FIG. 2 is an exploded structural diagram of a battery 100 according to some embodiments of this application. The battery 100 may include a box 10 and a battery cell 20, and the battery cell 20 is accommodated within the box 10.

The box 10 is configured to provide an assembly space for the battery cell 20 and the box 10 may adopt various structures. In some embodiments, the box 10 may include a first box body 11 and a second box body 12, the first box body 11 and the second box body 12 covering each other, together defining an assembly space for accommodating the battery cell 20. The second box body 12 may be a hollow structure with one open end, and the first box body 11 may be a plate-like structure, covering the open side of the second box body 12, so that the first box body 11 and the second box body 12 together define the assembly space. In other embodiments, the first box body 11 and the second box body 12 may both be hollow structures with one open side, with the open side of the first box body 11 covering the open side of the second box body 12. Certainly, the box 10 formed by the first box body 11 and the second box body 12 may be of various shapes, such as a cylinder or a cuboid. For example, in FIG. 2, the shape of the box 10 is a cuboid.

Optionally, in the battery 100, there may be one or more battery cells 20 accommodated in the box 10. When there are multiple battery cells 20 accommodated in the box 10, the multiple battery cells 20 may be connected in series, parallel, or a combination thereof, where the combination refers to a mix of series and parallel connections among the multiple battery cells 20. The multiple battery cells 20 may be directly connected in series, parallel, or a combination thereof, and an integral module formed by the multiple battery cells 20 is accommodated in the box 10. Certainly, in some embodiments, the battery 100 may include multiple battery cells 20 first connected in series, parallel, or a combination thereof to form battery modules, and the multiple battery modules are then connected in series, parallel, or a combination thereof to form an integral unit accommodated in the box 10.

In some embodiments, the battery 100 may further include other structures. For example, the battery 100 may further include a busbar component, and the busbar component is disposed within the box 10. The busbar component connects multiple battery cells 20 to achieve electrical connection between the multiple battery cells 20.

Each battery cell 20 may be a secondary battery or a primary battery, such as a lithium-sulfur battery, sodium-ion battery, or magnesium-ion battery, but is not limited thereto. The battery cell 20 may be cylindrical, flat, cuboid, or other shapes. For example, in FIG. 2, the battery cell 20 is a cuboid structure.

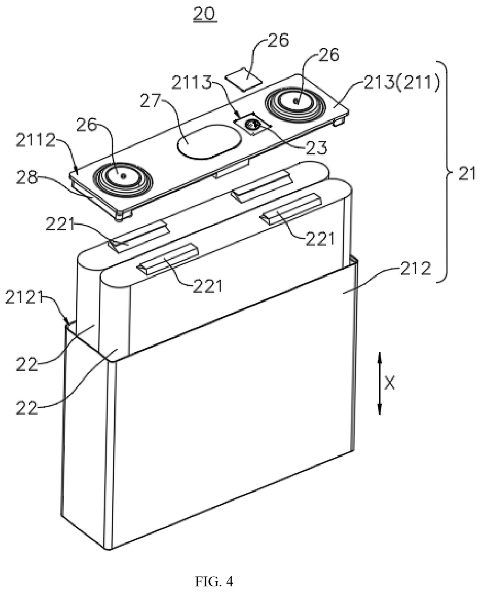

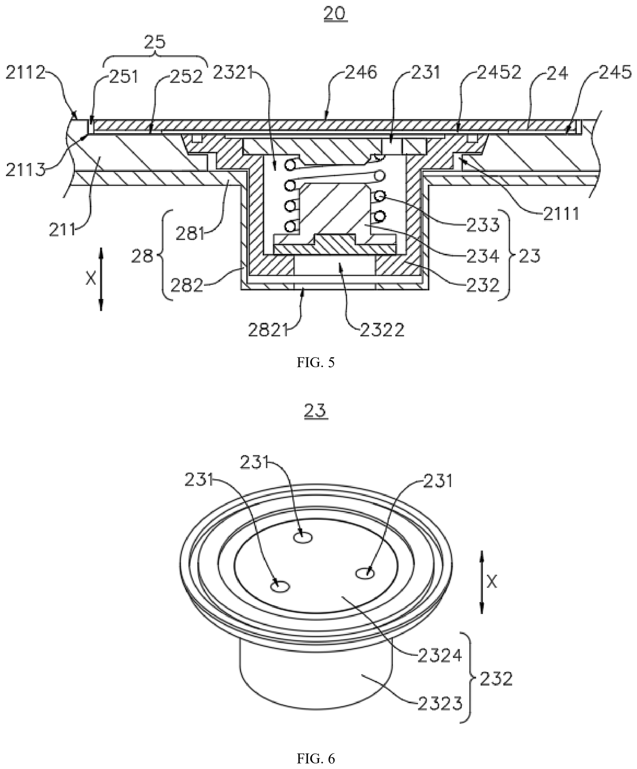

According to some embodiments of this application, referring to FIGs. 3, 4, 5, and 6, FIG. 3 is a schematic structural diagram of a battery cell 20 according to some embodiments of this application, FIG. 4 is an exploded structural diagram of a battery cell 20 according to some embodiments of this application, FIG. 5 is a partial cross-sectional view of a battery cell 20 according to some embodiments of this application, and FIG. 6 is a schematic structural diagram of a one-way valve 23 according to some embodiments of this application. This application provides a battery cell 20, and the battery cell 20 includes a housing 21, an electrode assembly 22, a one-way valve 23, and a cover member 24. The housing 21 has a wall portion 211, and the electrode assembly 22 is accommodated within the housing 21. The one-way valve 23 is disposed on the wall portion 211, and the one-way valve 23 has an exhaust port 231. The exhaust port 231 is configured to discharge gas from inside the housing 21. The cover member 24 is mounted on the wall portion 211. Along a thickness direction X of the wall portion, the cover member 24 is located on a side of the one-way valve 23 facing away from the electrode assembly 22 and the cover member 24 covers the one-way valve 23. An exhaust passage 25 is formed between the cover member 24 and the wall portion 211, and the exhaust passage 25 communicates the exhaust port 231 to the exterior of the housing 21.

The housing 21 may further be configured to accommodate an electrolyte, such as a liquid electrolyte. The housing 21 may have various structural forms, such as a cylinder or a cuboid. Similarly, the material of the housing 21 may be various, such as copper, iron, aluminum, steel, or aluminum alloy.

In some embodiments, the housing 21 may include a housing body 212 and an end cap 213, and a receiving cavity is formed in an interior of the housing body 212. The receiving cavity is configured to accommodate the electrode assembly 22, and the receiving cavity has an opening 2121. This means that the housing body 212 is a hollow structure with an opening 2121 on one end, and the end cap 213 covers the opening 2121 of the housing body 212 to form a sealed connection, creating a sealed space for accommodating the electrode assembly 22 and the electrolyte.

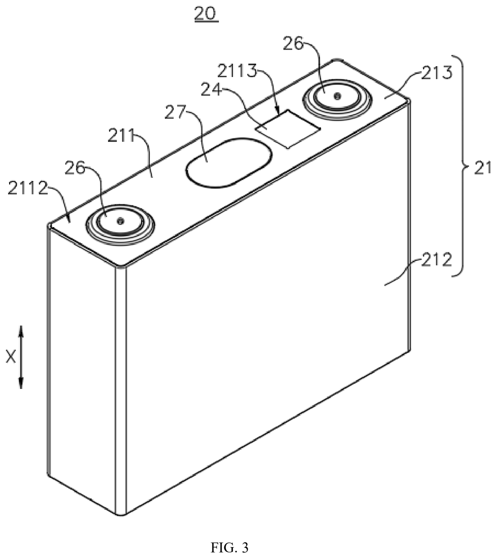

It should be noted that the wall portion 211 for mounting the one-way valve 23 may be the end cap 213 of the housing 21 or one wall of the housing body 212 of the housing 21. For example, in FIG. 3, the wall portion 211 is the end cap 213. Certainly, the structure of the battery cell 20 is not limited to this. In other embodiments, the wall portion 211 may alternatively be the bottom wall of the housing body 212 opposite the end cap 213, or the wall portion 211 may alternatively be a side wall of the housing body 212 adjacent to and connected with the end cap 213.

When assembling the battery cell 20, the electrode assembly 22 may first be placed into the housing body 212, a liquid electrolyte may be filled into the housing body 212, and then the end cap 213 is fitted onto the opening 2121 of the housing body 212 to complete the assembly of the battery cell 20.

The housing body 212 may have various shapes, such as a cylinder, cuboid, or prismatic structure. The shape of the housing body 212 may be determined based on the specific shape of the electrode assembly 22. For example, if the electrode assembly 22 is a cylindrical structure, a housing body 212 of a cylindrical structure may be used. If the electrode assembly 22 is a cuboid structure, a housing body 212 of a cuboid structure may be used. Certainly, the structure of the end cap 213 may also vary. For example, the end cap 213 is a plate-like structure or a hollow structure with one open end. For example, in FIG. 3, the housing body 212 is a cuboid structure.

Certainly, it should be understood that the housing 21 is not limited to the above structure. The housing 21 may alternatively be other structures. For example, the housing 21 may include a housing body 212 and two end caps 213. The housing body 212 is a hollow structure with openings 2121 on two opposite sides, with one end cap 213 covering one opening 2121 of the housing body 212 to form a sealed connection, creating a sealed space for accommodating the electrode assembly 22 and the electrolyte. In other words, the housing body 212 has the openings 2121 on two opposite sides, and the two end caps 213 respectively cover the two sides of the housing body 212 to close the corresponding openings 2121.

It should be noted that the electrode assembly 22 is a component of the battery cell 20 where electrochemical reactions occur, and the structure of the electrode assembly 22 may vary. For example, the electrode assembly 22 may be a wound structure formed by winding a positive electrode plate, a separator, and a negative electrode plate, or a stacked structure formed by stacking a positive electrode plate, a separator, and a negative electrode plate.

For example, the separator is a separator film, and the main material of the separator film may be selected from at least one of glass fiber, non-woven fabric, polyethylene, polypropylene, and polyvinylidene fluoride.

Optionally, there may be one or more electrode assemblies 22 accommodated within the housing 21. For example, in FIG. 3, the housing 21 of the battery cell 20 is provided with two electrode assemblies 22, the two electrode assemblies 22 being stacked along their thickness direction, meaning that the two electrode assemblies 22 are stacked along the thickness direction of the battery cell 20. Certainly, in other embodiments, there may be one, three, four, five, six, seven, or eight electrode assemblies 22 accommodated within the housing 21.

It should be noted that the one-way valve 23 is disposed on the wall portion 211, and the one-way valve 23 is configured to discharge gas from inside the housing 21, meaning that the one-way valve 23 can open unidirectionally to allow gas inside the housing 21 to be discharged to the exterior of the housing 21 through the one-way valve 23. Optionally, the structure of the one-way valve 23 disposed on the wall portion 211 may vary, such as the one-way valve 23 being welded to the wall portion 211, the one-way valve 23 being snap-fitted to the wall portion 211, or the one-way valve 23 being adhered to the wall portion 211. The exterior of the housing 21 refers to the external environment of the battery cell 20.

For example, in FIG. 5, in FIG. 5, the wall portion 211 is provided with a mounting hole 2111, the mounting hole 2111 communicates the interior of the housing 21 to the exterior of the housing 21, a portion of the one-way valve 23 being assembled into the mounting hole 2111 and extending into the interior of the housing 21 along the thickness direction X of the wall portion, with a sealed connection between the one-way valve 23 and the wall surface of the mounting hole 2111.

The cover member 24 is mounted on the wall portion 211, and along the thickness direction X of the wall portion, the cover member 24 is located on a side of the one-way valve 23 facing away from the electrode assembly 22, meaning that the cover member 24 and the one-way valve 23 are arranged along the thickness direction X of the wall portion, with the cover member 24 being farther from the electrode assembly 22 than the one-way valve 23. Optionally, the structure of the cover member 24 mounted on the wall portion 211 may vary, such as the cover member 24 being mounted on the wall portion 211 by welding, interference fit, bolting, snap-fitting, or adhesion.

The cover member 24 covers the one-way valve 23, meaning that the projection of the one-way valve 23 in the thickness direction X of the wall portion is located within the cover member 24.

An exhaust passage 25 formed between the cover member 24 and the wall portion 211, and the exhaust passage 25 communicates the exhaust port 231 to the exterior of the housing 21, meaning that the cover member 24 and the wall portion 211 together define the exhaust passage 25 communicating the exhaust port 231 of the one-way valve 23 to the exterior of the housing 21, allowing gas inside the housing 21 discharged from the exhaust port 231 of the one-way valve 23 to enter the exhaust passage 25 and then be discharged to the exterior of the housing 21.

For example, the material of the cover member 24 may be copper, iron, aluminum, steel, or aluminum alloy.

In some embodiments, the battery cell 20 may further include electrode terminals 26, the electrode terminals 26 being insulatedly mounted on the housing 21 and electrically connected to the electrode assembly 22 to output or input electrical energy of the battery cell 20.

It should be noted that the electrode terminals 26 are insulatedly mounted on the housing 21, meaning that no electrical connection is formed between the electrode terminals 26 and the housing 21.

In FIG. 3, the battery cell 20 includes two electrode terminals 26, and correspondingly, each electrode assembly 22 has two tabs 221, and the two tabs 221 have opposite polarities. The two electrode terminals 26 are electrically connected to the two tabs 221 of the electrode assembly 22 to achieve input or output of the positive and negative electrodes of the battery cell 20. It should be noted that the tab 221 of the electrode assembly 22 is a component formed by stacking and connecting regions of the positive electrode plate not coated with a positive electrode active material layer or regions of the negative electrode plate not coated with a negative electrode active material layer. If the tab 221 is configured to output the positive electrode of the electrode assembly 22, the tab 221 is a component formed by stacking and connecting regions of the positive electrode plate not coated with positive electrode active material. If the tab 221 is configured to output the negative electrode of the electrode assembly 22, the tab 221 is a component formed by stacking and connecting regions of the negative electrode plate not coated with negative electrode active material.

For example, the material of the electrode terminals 26 may vary, such as copper, iron, aluminum, steel, or aluminum alloy.

The structure of the electrode terminals 26 mounted on the housing 21 may vary. For example, in FIG. 3, both electrode terminals 26 are mounted on the end cap 213 of the housing 21. Certainly, the structure of the battery cell 20 is not limited to this. In other embodiments, both electrode terminals 26 may be mounted on the housing body 212 of the housing 21, or one electrode terminal 26 may be mounted on the housing body 212 of the housing 21, and the other electrode terminal 26 may be mounted on the end cap 213 of the housing 21.

In some embodiments, the battery cell 20 may further include a pressure relief mechanism 27, the pressure relief mechanism 27 being mounted on the housing 21. Optionally, the pressure relief mechanism 27 may be disposed on the end cap 213 of the housing 21 or on the housing body 212 of the housing 21, the pressure relief mechanism 27 is configured to release internal pressure of the battery cell 20 when the internal pressure or temperature of the battery cell 20 reaches a predetermined value.

For example, in FIG. 3, the pressure relief mechanism 27 is disposed on the end cap 213 of the housing 21, and the pressure relief mechanism 27 may be a pressure relief component such as an explosion-proof valve, explosion-proof disc, pressure relief valve, or safety valve.

By providing the one-way valve 23 on the wall portion 211 of the housing 21, the one-way valve 23 can open unidirectionally to discharge gas from inside the housing 21 to the exterior of the housing 21, thereby allowing gas generated inside the housing 21 during normal use of the battery cell 20 to be discharged to the exterior of the housing 21 through the one-way valve 23. This mitigates the phenomenon that the rise in the internal gas pressure of the battery cell 20 makes the internal pressure of the battery cell 20 reach a threshold prematurely, which causes premature actuation of the battery cell 20 to release pressure, thereby effectively enhancing the use stability of the battery cell 20 and improving the service life and use reliability of the battery cell 20. Additionally, by providing the cover member 24 on the side of the one-way valve 23 facing away from the electrode assembly 22, with the cover member 24 covering the one-way valve 23, the cover member 24 can provide a certain degree of protection and shielding for the one-way valve 23. This can reduce wear or damage to the one-way valve 23 in external environments and lower the risk of impurities or particles from the external environment entering the one-way valve 23, which is beneficial to improving the service life of the one-way valve 23. Furthermore, covering the one-way valve 23 with the cover member 24 can enhance the aesthetic appearance of the outer surface of the battery cell 20. Moreover, it facilitates a corresponding connection of a detection component or another part on the side of the cover member 24 facing away from the one-way valve 23, reducing interference from the region of the wall portion 211 where the one-way valve 23 is disposed on the connection of the detection component or another part.

According to some embodiments of this application, referring to FIGs. 3, 4, and 5, along the thickness direction X of the wall portion, the wall portion 211 has a first surface 2112 facing away from the electrode assembly 22, the first surface 2112 is provided with a mounting groove 2113, a groove bottom surface of the mounting groove 2113 is provided with a mounting hole 2111, at least a portion of the one-way valve 23 is disposed within the mounting hole 2111, and at least a portion of the cover member 24 is accommodated within the mounting groove 2113.

The first surface 2112 is provided with a mounting groove 2113, and the groove bottom surface of the mounting groove 2113 is provided with a mounting hole 2111, meaning that the mounting hole 2111 extends through the groove bottom surface of the mounting groove 2113, allowing the mounting hole 2111 to connect to the exterior of the housing 21 through the mounting groove 2113.

At least a portion of the cover member 24 is accommodated within the mounting groove 2113, meaning that the cover member 24 may be entirely located within the mounting groove 2113 or only partially located within the mounting groove 2113. For example, in FIG. 5, the cover member 24 is entirely located within the mounting groove 2113.

By providing the mounting groove 2113 on the first surface 2112 of the wall portion 211 facing away from the electrode assembly 22, with at least the portion of the cover member 24 accommodated within the mounting groove 2113, the space occupied by the cover member 24 and the wall portion 211 in the thickness direction X of the wall portion can be reduced, which is beneficial to optimizing the volume of the battery cell 20. Additionally, the mounting groove 2113 can provide a certain degree of positioning and limiting for the cover member 24, which is beneficial to reducing the assembly difficulty of connecting the cover member 24 to the wall portion 211.

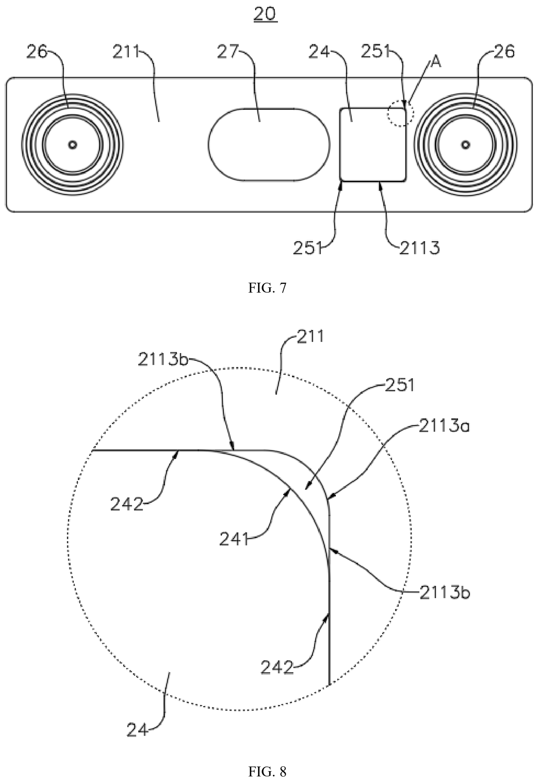

According to some embodiments of this application, referring to FIGs. 4 and 5, and further referring to FIGs. 7 and 8, FIG. 7 is a top view of a battery cell 20 according to some embodiments of this application, and FIG. 8 is a partial enlarged view of portion A of the battery cell 20 shown in FIG. 7. The exhaust passage 25 may include a first exhaust gap 251, the first exhaust gap 251 is formed between the cover member 24 and a groove side surface of the mounting groove 2113, and the first exhaust gap 251 is configured to connect the exhaust port 231 and the exterior of the housing 21.

The first exhaust gap 251 serves to connect the exhaust port 231 and the exterior of the housing 21. The first exhaust gap 251 may be directly connected to the exhaust port 231, for example, with at least a portion of the projection of the first exhaust gap 251 in the thickness direction X of the wall portion located within the mounting hole 2111, allowing the exhaust port 231 of the one-way valve 23 disposed within the mounting hole 2111 to directly connect to the first exhaust gap 251. Certainly, the first exhaust gap 251 may alternatively indirectly communicate with the exhaust port 231. For example, as shown in FIG. 5, the exhaust passage 25 may further include a second exhaust gap 252, the second exhaust gap 252 is formed between the cover member 24 and the groove bottom surface of the mounting groove 2113, and the second exhaust gap 252 communicates the first exhaust gap 251 to the exhaust port 231 of the one-way valve 23.

By forming the first exhaust gap 251 between the cover member 24 and the groove side surface of the mounting groove 2113, which communicates with the exterior of the housing 21, gas discharged from the one-way valve 23 can be expelled to the exterior of the housing 21 through the first exhaust gap 251. The battery cell 20 of this structure can eliminate the need to form a hole in the cover member 24, which is beneficial to reducing processing difficulty and enhancing the aesthetic appearance of the battery cell 20.

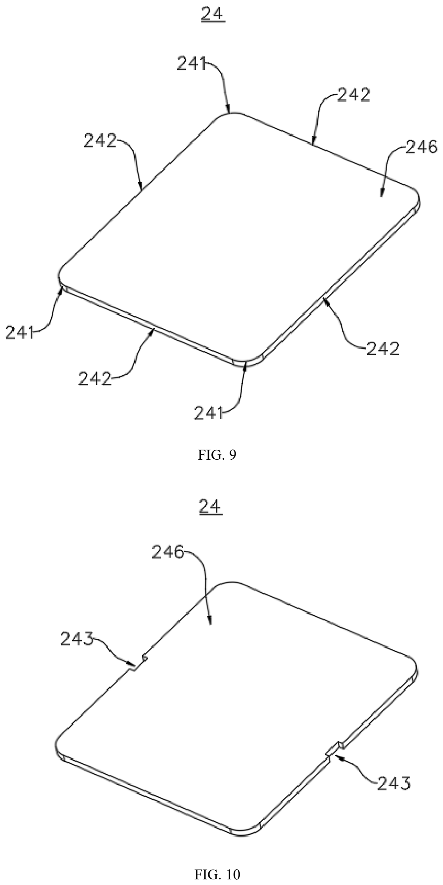

It should be noted that the structure of the first exhaust gap 251 formed between the cover member 24 and the groove side surface of the mounting groove 2113 may vary. According to some embodiments of this application, referring to FIGs. 7 and 8, and further referring to FIG. 9, FIG. 9 is a schematic structural diagram of a cover member 24 according to some embodiments of this application. An outer peripheral surface of the cover member 24 includes a first corner surface 241 and at least two first side surfaces 242, and the first corner surface 241 connects two adjacent first side surfaces 242. the groove side surface of the mounting groove 2113 includes a second corner surface 2113a and at least two second side surfaces 2113b, the second corner surface 2113a connects two adjacent second side surfaces 2113b, each second side surface 2113b is connected to one first side surface 242, and the first exhaust gap 251 is formed between the second corner surface 2113a and the first corner surface 241.

The first corner surface 241 connects two adjacent first side surfaces 242, meaning that, in the circumferential direction of the cover member 24, the first corner surface 241 is located between the two first side surfaces 242 and connects the two first side surfaces 242. That is, the first corner surface 241 is the surface at the corner of the outer peripheral surface of the cover member 24.

The second corner surface 2113a connects two adjacent second side surfaces 2113b, meaning that, in the circumferential direction of the mounting groove 2113, the second corner surface 2113a is located between the two second side surfaces 2113b and connects the two second side surfaces 2113b, that is, the second corner surface 2113a is the surface at the corner of the groove side surface of the mounting groove 2113.

Each first side surface 242 of the cover member 24 abuts against and is connected to the corresponding second side surface 2113b of the groove side surface of the mounting groove 2113, so that the first corner surface 241 of the cover member 24 faces towards the second corner surface 2113a of the groove side surface of the mounting groove 2113, forming the first exhaust gap 251 between the first corner surface 241 and the second corner surface 2113a.

Optionally, the connection structure between the first side surface 242 and the second side surface 2113b may vary, such as welding, adhesion, or interference fit.

For example, in FIGs. 7 and 8, both the cover member 24 and the mounting groove 2113 are rectangular structures, such that four first corner surfaces 241 are formed at the four corners of the cover member 24, and correspondingly, four second corner surfaces 2113a are formed at the four corners of the groove side surface of the mounting groove 2113, resulting in four first exhaust gaps 251 formed between the cover member 24 and the groove side surface of the mounting groove 2113.

Two adjacent first side surfaces 242 on the outer peripheral surface of the cover member 24 are connected by the first corner surface 241, and two adjacent second side surfaces 2113b on the groove side surface of the mounting groove 2113 are connected by the second corner surface 2113a. Each first side surface 242 is connected to one second side surface 2113b, and the first gap is formed between the first corner surface 241 and the second corner surface 2113a, meaning that the first exhaust gap 251 is formed at the corners of the cover member 24 and the mounting groove 2113. This facilitates the formation of the first exhaust gap 251 between the outer peripheral surface of the cover member 24 and the groove side surface of the mounting groove 2113, and is simple in design and easy to implement. Additionally, in addition to the formation of the first exhaust gap 251 between the outer peripheral surface of the cover member 24 and the groove side surface of the mounting groove 2113, this facilitates to increasing the connection area between the outer peripheral surface of the cover member 24 and the groove side surface of the mounting groove 2113, which is beneficial to enhancing the firmness of the cover member 24's connection to the wall portion 211.

In some embodiments, referring to FIGs. 7, 8, and 9, the first corner surface 241 and the second corner surface 2113a are both arcuate surfaces, and a radius of the first corner surface 241 is greater than a radius of the second corner surface 2113a.

The first corner surface 241 and the second corner surface 2113a are both arcuate surfaces, meaning that the first corner surface 241 is the surface formed at the rounded corner of the outer peripheral surface of the cover member 24, and similarly, the second corner surface 2113a is the surface formed at the rounded corner of the groove side surface of the mounting groove 2113. Certainly, in other embodiments, the first corner surface 241 may be the surface formed at the chamfered corner of the outer peripheral surface of the cover member 24, and the second corner surface 2113a may be the surface formed at the chamfered corner of the groove side surface of the mounting groove 2113.

The radius of the first corner surface 241 is greater than the radius of the second corner surface 2113a, meaning that the diameter of the rounded corner of the outer peripheral surface of the cover member 24 is greater than the diameter of the rounded corner of the groove side surface of the mounting groove 2113.

By configuring both the first corner surface 241 and the second corner surface 2113a as arcuate surfaces, and the radius of the first corner surface 241 being greater than the radius of the second corner surface 2113a, the first exhaust gap 251 is formed between the first corner surface 241 and the second corner surface 2113a. This structure is simple and easy to manufacture and process.

In some embodiments, the first side surface 242 is welded to the second side surface 2113b.

Configuring the first side surface 242 and the second side surface 2113b as structures welded to each other helps to improve the connection firmness between the cover member 24 and the groove side surface of the mounting groove 2113, thereby improving the structural stability of the cover member 24 assembled on the wall portion 211.

In some embodiments, referring to FIGs. 7, 8, and 9, a cross-section of the cover member 24 perpendicular to the thickness direction X of the wall portion is rectangular, the outer peripheral surface of the cover member 24 includes four first side surfaces 242 and four first corner surfaces 241, and the first exhaust gap 251 is formed at at least one of the first corner surfaces 241.

The cover member 24 has a rectangular cross-section perpendicular to the thickness direction X of the wall portion, meaning that the cover member 24 is a rectangular structure. Correspondingly, the shape of the mounting groove 2113 matches the cover member 24, and the mounting groove 2113 is also a rectangular structure.

The first exhaust gap 251 is formed at at least one first corner surface 241, meaning that among the four first corner surfaces 241 of the cover member 24, the first exhaust gap 251 may be formed at one first corner surfaces 241, or the first exhaust gap 251 may be formed at two, three, or all four first corner surfaces 241.

It should be noted that, in other embodiments, the cross-section of the cover member 24 perpendicular to the thickness direction X of the wall portion may also be triangular, pentagonal, hexagonal, or trapezoidal.

By configuring the cover member 24 as a rectangular plate-like structure, the four edges of the cover member 24 form the four first side surfaces 242, and the four first corner surfaces 241 are formed at four right angles of the cover member 24. This structure is simple and easy to manufacture.

According to some embodiments of this application, the first exhaust gap 251 formed between the cover member 24 and the groove side surface of the mounting groove 2113 may alternatively be another structure. For example, referring to FIG. 10, FIG. 10 is a schematic structural diagram of a cover member 24 according to some other embodiments of this application. The outer peripheral surface of the cover member 24 is provided with a groove 243, and the first exhaust gap 251 is formed between a groove bottom surface of the groove 243 and the groove side surface of the mounting groove 2113.

The outer peripheral surface of the cover member 24 is configured to connect with the groove side surface of the mounting groove 2113 to mount the cover member 24 within the mounting groove 2113. By providing the groove 243 on the outer peripheral surface of the cover member 24, a notch is formed at the position of the groove 243, so that the cover member 24 and the groove side surface of the mounting groove 2113 together define the first exhaust gap 251 at the position of the groove 243.

Optionally, the connection structure between the outer peripheral surface of the cover member 24 and the groove side surface of the mounting groove 2113 may vary, such as welding or adhesion.

Optionally, the number of grooves 243 provided on the outer peripheral surface of the cover member 24 may be one or more. When multiple grooves 243 are provided on the outer peripheral surface of the cover member 24, the multiple grooves 243 are spaced apart along the circumferential direction of the cover member 24.

For example, in FIG. 10, the cover member 24 is a rectangular structure, and grooves 243 are provided on two of the four straight edges of the cover member 24. Certainly, in other embodiments, the number of grooves 243 provided on the outer peripheral surface of the cover member 24 may be three, four, or five, and the shape of the cover member 24 may also be triangular, trapezoidal, or circular.

By providing the groove 243 on the outer peripheral surface of the cover member 24, the first exhaust gap 251 for gas discharge is formed between the groove bottom surface of the groove 243 and the groove side surface of the mounting groove 2113. This structure is simple and easy to manufacture.

In some embodiments, a region of the outer peripheral surface of the cover member 24 not provided with the groove 243 is welded to the groove side surface of the mounting groove 2113.

By welding the region of the outer peripheral surface of the cover member 24 where the groove 243 is not provided to the groove side surface of the mounting groove 2113, the cover member 24 is connected to the groove side surface of the mounting groove 2113. The battery cell 20 of this structure helps to the connection firmness between the cover member 24 and the wall portion 211, improving the structural stability of the cover member 24 assembled on the wall portion 211.

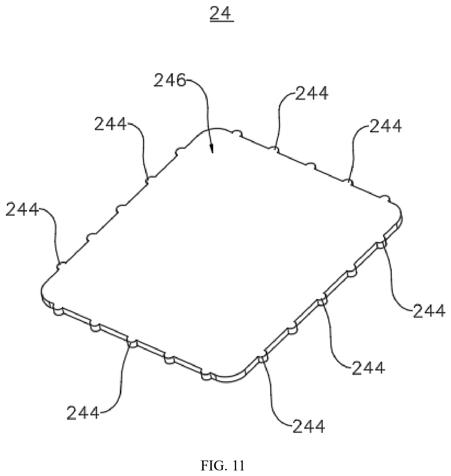

According to some embodiments of this application, the first exhaust gap 251 formed between the cover member 24 and the groove side surface of the mounting groove 2113 may alternatively be another structure. For example, referring to FIG. 11, FIG. 11 is a schematic structural diagram of a cover member 24 according to some further embodiments of this application. The outer peripheral surface of the cover member 24 is provided with a plurality of protrusions 244, the protrusions 244 are spaced apart along a circumferential direction of the cover member 24, the protrusions 244 abut against the groove side surface of the mounting groove 2113, and the first exhaust gap 251 is formed between a region of the outer peripheral surface of the cover member 24 not provided with the protrusions 244 and the groove side surface of the mounting groove 2113.

The protrusions 244 abut against the groove side surface of the mounting groove 2113, forming a cavity between two adjacent protrusions 244, so that the outer peripheral surface of the cover member 24, the groove side surface of the mounting groove 2113, and the two adjacent protrusions 244 together define the first exhaust gap 251.

Optionally, in this embodiment, the structure for assembling the cover member 24 in the mounting groove 2113 may vary, such as the cover member 24 being assembled in the mounting groove 2113 by interference fitting, welding, or adhering it to the groove side surface of the mounting groove 2113 through the abutting portions.

By providing the plurality of protrusions 244 spaced apart along the circumferential direction of the cover member 24 on the outer peripheral surface of the cover member 24, with the protrusions 244 abutting against the groove side surface of the mounting groove 2113, the first exhaust gap 251 for gas discharge is formed between the region of the outer peripheral surface of the cover member 24 not provided with the protrusions 244 and the groove side surface of the mounting groove 2113, meaning that the first exhaust gap 251 is located between two adjacent protrusions 244. This structure is simple and easy to assemble.

In some embodiments, the protrusions 244 are in interference fit with the groove side surface of the mounting groove 2113.

By making the protrusions 244 provided on the outer peripheral surface of the cover member 24 in interference fit with the groove side surface of the mounting groove 2113, the cover member 24 is fixed within the mounting groove 2113. The battery cell 20 of this structure forms the first exhaust gap 251 between two adjacent protrusions 244 while facilitating the installation of the cover member 24 on the wall portion 211, helping to reduce the assembly difficulty of the cover member 24.

It should be noted that, in some embodiments, the first exhaust gap 251 may have other structures, such as a ventilation groove provided on the groove side surface of the mounting groove 2113, so that the first exhaust gap 251 is formed between the groove bottom surface of the ventilation groove and the outer peripheral surface of the cover member 24.

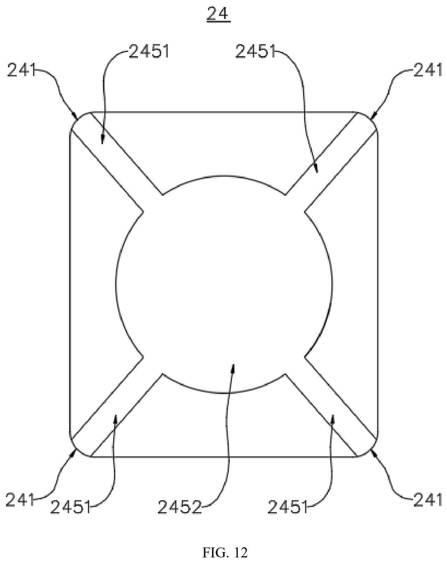

According to some embodiments of this application, referring to FIG. 5, and further referring to FIG. 12, FIG. 12 is a bottom view of a cover member 24 according to some embodiments of this application. The exhaust passage 25 may further include a second exhaust gap 252, the second exhaust gap 252 is formed between the cover member 24 and the groove bottom surface of the mounting groove 2113, and the second exhaust gap 252 communicates the first exhaust gap 251 to the exhaust port 231.

The second exhaust gap 252 is formed between the cover member 24 and the groove bottom surface of the mounting groove 2113. This may be achieved by spacing the cover member 24 and the groove bottom surface of the mounting groove 2113 apart along the thickness direction X of the wall portion, forming the second exhaust gap 252 between the surface of the cover member 24 facing towards the groove bottom surface of the mounting groove 2113 and the groove bottom surface of the mounting groove 2113, or by providing a first groove 2451 on the surface of the cover member 24 facing towards the groove bottom surface of the mounting groove 2113, so that the second exhaust gap 252 is formed between the groove bottom surface of the first groove 2451 and the groove bottom surface of the mounting groove 2113.

It should be noted that, in other embodiments, the first groove 2451 may alternatively be formed by providing a first groove 2451 on the groove bottom surface of the mounting groove 2113, so that the second exhaust gap 252 is formed between the groove bottom surface of the first groove 2451 and the surface of the cover member 24 facing towards the groove bottom surface of the mounting groove 2113.

The exhaust passage 25 further includes the second exhaust gap 252 formed between the cover member 24 and the groove bottom surface of the mounting groove 2113, with the second exhaust gap 252 communicating the first exhaust gap 251 to the exhaust port 231. This mitigates the phenomenon of obstructed gas discharge between the exhaust port 231 and the first exhaust gap 251 caused by the cover member 24 abutting against the groove bottom surface of the mounting groove 2113, thereby improving the smoothness of gas discharge from the exhaust port 231 of the one-way valve 23 to the first exhaust gap 251.

In some embodiments, referring to FIGs. 5 and 12, along the thickness direction X of the wall portion, the cover member 24 has a second surface 245 facing towards the one-way valve 23, the second surface 245 overlaps the groove bottom surface of the mounting groove 2113, the second surface 245 is provided with a first groove 2451, and the second exhaust gap 252 is formed between a groove bottom surface of the first groove 2451 and the groove bottom surface of the mounting groove 2113.

The second surface 245 overlaps the groove bottom surface of the mounting groove 2113, meaning that a portion of the second surface 245 abuts against the groove bottom surface of the mounting groove 2113, that is, along the thickness direction X of the wall portion, the cover member 24 abuts against the groove bottom surface of the mounting groove 2113.

The second exhaust gap 252 is formed between the groove bottom surface of the first groove 2451 and the groove bottom surface of the mounting groove 2113, meaning that the groove bottom surface of the first groove 2451, the groove side surface of the first groove 2451, and the groove bottom surface of the mounting groove 2113 together define the second exhaust gap 252.

By configuring the second surface 245 of the cover member 24 to overlap the groove bottom surface of the mounting groove 2113, the cover member 24 abuts against the groove bottom surface of the mounting groove 2113, enhancing the structural stability and reliability of the cover member 24 installed in the mounting groove 2113. Additionally, by providing the first groove 2451 on the second surface 245, the second exhaust gap 252 is formed between the groove bottom surface of the first groove 2451 and the groove bottom surface of the mounting groove 2113, allowing gas discharged from the exhaust port 231 of the one-way valve 23 to enter the first exhaust gap 251 through the first groove 2451 and then be discharged to the exterior of the housing 21. This enables the communication between the first exhaust gap 251 and the exhaust port 231 through the first groove 2451 while allowing the cover member 24 to abut against the groove bottom surface of the mounting groove 2113.

In some embodiments, referring to FIGs. 5, 7, 8, and 12, a plurality of first exhaust gaps 251 are formed between the cover member 24 and the groove side surface of the mounting groove 2113, the plurality of first exhaust gaps 251 are spaced apart along a circumferential direction of the cover member 24, the second surface 245 is provided with a plurality of first grooves 2451, and each first exhaust gap 251 is connected to one first groove 2451.

In embodiments where the first exhaust gap 251 is formed between the first corner surface 241 and the second corner surface 2113a, as shown in FIG. 12, the first groove 2451 extends along the radial direction of the cover member 24 and extends through the first corner surface 241, so that the second exhaust gap 252 is formed between the groove bottom surface of the first groove 2451 and the groove bottom surface of the mounting groove 2113 can connect to the first exhaust gap 251 is formed between the first corner surface 241 and the second corner surface 2113a. Certainly, in embodiments where the first exhaust gap 251 is formed between the groove bottom surface of the groove 243 of the cover member 24 and the groove side surface of the mounting groove 2113, the first groove 2451 extends through the groove bottom surface of the groove 243. Similarly, in embodiments where the first exhaust gap 251 is formed between the region of the outer peripheral surface of the cover member 24 where the protrusions 244 are not provided and the groove side surface of the mounting groove 2113, the first groove 2451 extends through the region of the outer peripheral surface of the cover member 24 where the protrusions 244 are not provided.

For example, in FIG. 12, the cover member 24 has four first corner surfaces 241, with a first exhaust gap 251 formed at each first corner surface 241, and correspondingly, the second surface 245 of the cover member 24 is provided with four first grooves 2451, each first groove 2451 extending through one first corner surface 241.

Forming the plurality of first exhaust gaps 251 between the cover member 24 and the groove side surface of the mounting groove 2113, with each first exhaust gap 251 communicated with one first groove 2451, helps to further improve the exhaust efficiency.

According to some embodiments of this application, referring to FIGs. 5 and 12, the second surface 245 is further provided with a second groove 2452, the plurality of first grooves 2451 are disposed around the second groove 2452 and communicate with the second groove 2452, and the second groove 2452 communicates with the exhaust port 231.

For example, the second surface 245 of the cover member 24 is provided with four first grooves 2451, the four first grooves 2451 are spaced apart along the circumferential direction of the second groove 2452, and each first groove 2451 extends along the radial direction of the cover member 24 and extends through the groove side surface of the second groove 2452, so that the first groove 2451 can connect to the exhaust port 231 through the second groove 2452, thereby enabling the second exhaust gap 252 to connect to the exhaust port 231 through the second groove 2452.

By providing the second groove 2452 on the second surface 245 of the cover member 24 facing towards the one-way valve 23, with the second groove 2452 communicated to the exhaust port 231 of the one-way valve 23, and the plurality of first grooves 2451 disposed around the second groove 2452 and communicated with the second groove 2452, gas discharged from the exhaust port 231 of the one-way valve 23 can enter the second groove 2452 and then pass through the first grooves 2451 to the corresponding first exhaust gaps 251 to be discharged to the exterior of the housing 21. This improves exhaust efficiency and can mitigate the accumulation of gas between the cover member 24 and the one-way valve 23.

In some embodiments, referring to FIG. 5, along the thickness direction X of the wall portion, the exhaust port 231 is disposed at an end of the one-way valve 23 facing away from the electrode assembly 22, the exhaust port 231 is disposed facing towards the second groove 2452, and a projection of the exhaust port 231 is located within the second groove 2452.

For example, the projection of the one-way valve 23 in the thickness direction X of the wall portion is entirely located within the second groove 2452.

By configuring the exhaust port 231 of the one-way valve 23 and the second groove 2452 to face towards each other, with the projection of the exhaust port 231 in the thickness direction X of the wall portion located within the second groove 2452, the second groove 2452 covers the exhaust port 231 in the thickness direction X of the wall portion, allowing gas discharged from the exhaust port 231 of the one-way valve 23 to directly enter the second groove 2452, which is beneficial to improving exhaust smoothness and exhaust efficiency.

According to some embodiments of this application, referring to FIG. 5, along the thickness direction X of the wall portion, the cover member 24 does not extend beyond the first surface 2112.

The cover member 24 does not extend beyond the first surface 2112, meaning that the cover member 24 does not extend out of the mounting groove 2113 in the thickness direction X of the wall portion, so that the cover member 24 is entirely located within the mounting groove 2113.

By configuring the cover member 24 to not extend beyond the first surface 2112 of the wall portion 211 facing away from the electrode assembly 22 in the thickness direction X of the wall portion, the mounting groove 2113 can provide a certain degree of protection to the cover member 24, further reducing wear on the cover member 24.

In some embodiments, still referring to FIG. 5, the cover member 24 has a third surface 246 facing away from the one-way valve 23, the third surface 246 being flush with the first surface 2112.

Configuring the third surface 246 of the cover member 24 facing away from the one-way valve 23 to be flush with the first surface 2112 of the wall portion 211 facing away from the electrode assembly 22 helps to further improve the aesthetic appearance of the outer surface of the battery cell 20 and facilitates the provision of information codes or the connection of a detection component or another part on the third surface 246 of the cover member 24.

It should be noted that the information code may be a quick response code, barcode, number, or text, and information about the battery cell 20 can be obtained by scanning or manual inputting the information code. The detection component may include a circuit board and a sampling terminal electrically connected to the circuit board, such as a metal piece (for example, nickel piece) or a temperature sensor.

According to some embodiments of this application, referring to FIG. 5, along the thickness direction X of the wall portion, the one-way valve 23 does not extend beyond the groove bottom surface of the mounting groove 2113.

The one-way valve 23 does not extend beyond the groove bottom surface of the mounting groove 2113, meaning that the one-way valve 23 is disposed within the mounting hole 2111 and does not extend into the mounting groove 2113 in the thickness direction X of the wall portion.

For example, in FIG. 5, the end face of the one-way valve 23 facing away from the electrode assembly 22 in the thickness direction X of the wall portion is flush with the groove bottom surface of the mounting groove 2113, and the projection of the one-way valve 23 in the thickness direction X of the wall portion is located within the second groove 2452, so that the one-way valve 23 and the groove bottom surface of the second groove 2452 are spaced apart along the thickness direction X of the wall portion. A portion of the one-way valve 23 facing towards the electrode assembly 22 in the thickness direction X of the wall portion protrudes beyond the surface of the wall portion 211 facing towards the electrode assembly 22, so that a portion of the one-way valve 23 extends into the interior of the housing 21.

By configuring the one-way valve 23 to not extend beyond the groove bottom surface of the mounting groove 2113 in the thickness direction X of the wall portion, meaning that the one-way valve 23 disposed within the mounting hole 2111 does not extend into the mounting groove 2113, interference between the one-way valve 23 and the cover member 24 disposed in the mounting groove 2113 can be reduced, and gas discharge by the one-way valve 23 is facilitated.

According to some embodiments of this application, the cover member 24 is fixedly connected to the wall portion 211.

Optionally, the structure for fixedly connecting the cover member 24 to the wall portion 211 may vary, such as the cover member 24 is connected to the wall portion 211 by welding, adhesion, or interference fit.

Configuring the cover member 24 to be fixedly connected to the wall portion 211 helps to reduce the risk of the cover member 24 falling off the wall portion 211 during use, and can improve the connection firmness between the cover member 24 and the wall portion 211, facilitating the provision of information codes or the connection of a detection component or another part on the cover member 24.

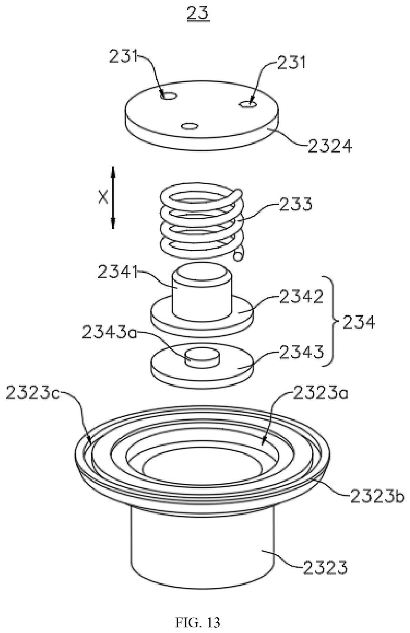

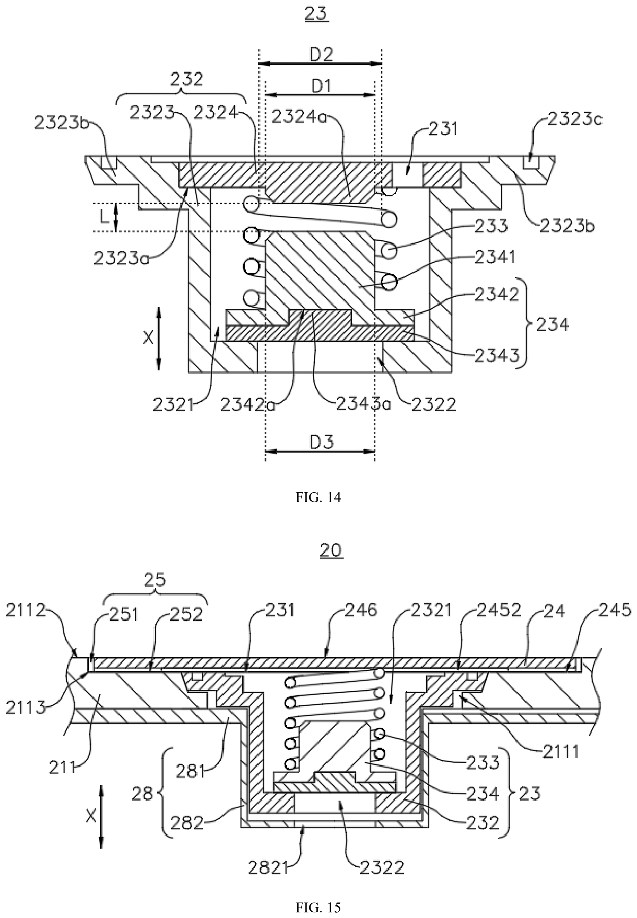

According to some embodiments of this application, referring to FIGs. 5 and 6, and further referring to FIGs. 13 and 14, FIG. 13 is an exploded structural diagram of a one-way valve 23 according to some embodiments of this application, and FIG. 14 is a cross-sectional view of a one-way valve 23 according to some embodiments of this application. The one-way valve 23 may include a valve body 232, an elastic member 233, and a sealing member 234. The valve body 232 is disposed on the wall portion 211, where a mounting cavity 2321 is formed in an interior of the valve body 232, the valve body 232 is provided with an intake port 2322 and an exhaust port 231, the intake port 2322 is configured to connect the mounting cavity 2321 and an interior of the housing 21, and the exhaust port 231 is configured to communicate the mounting cavity 2321 to the exhaust passage 25. The elastic member 233 is disposed within the mounting cavity 2321. The sealing member 234 is movably disposed within the mounting cavity 2321, where the sealing member 234 is configured to seal the intake port 2322 under the action of the elastic member 233 and to open the intake port 2322 under the action of gas inside the housing 21.

The intake port 2322 is configured to connect the mounting cavity 2321 and the interior of the housing 21, meaning that gas inside the housing 21 can enter the mounting cavity 2321 through the intake port 2322. Similarly, the exhaust port 231 is configured to connect the mounting cavity 2321 and the exhaust passage 25, meaning that gas entering the mounting cavity 2321 from inside the housing 21 can enter the exhaust passage 25 through the exhaust port 231 and then be discharged to the exterior of the housing 21 through the exhaust passage 25.

The sealing member 234 is movably disposed within the mounting cavity 2321, meaning that the sealing member 234 can move within the mounting cavity 2321, enabling the sealing member 234 to seal the intake port 2322 when moving toward the intake port 2322 and to open the intake port 2322 when the sealing member 234 moves away from the intake port 2322.

The sealing member 234 is configured to seal the intake port 2322 under the action of the elastic member 233 and to open the intake port 2322 under the action of gas inside the housing 21, meaning that the elastic member 233 can provide an elastic force to the sealing member 234, enabling the sealing member 234 to abut against the cavity bottom surface of the mounting cavity 2321 to seal the intake port 2322. Conversely, when the force exerted by the gas inside the housing 21 on the sealing member 234 is greater than the elastic force of the elastic member 233, the gas inside the housing 21 can overcome the elastic force of the elastic member 233 and push the sealing member 234 away from the cavity bottom surface of the mounting cavity 2321, enabling the sealing member 234 to open the intake port 2322, thereby allowing gas inside the housing 21 to enter the mounting cavity 2321 through the intake port 2322 and then be discharged through the exhaust port 231.

Optionally, the elastic member 233 is a component with elasticity, and its structure may vary, such as an elastic sheet, a sring, or an elastic rubber. For example, in FIGs. 13 and 14, the elastic member 233 is a spring. Certainly, in other embodiments, the elastic member 233 and the sealing member 234 may be an integral elastic component, such as elastic rubber.

It should be noted that the projection of the exhaust port 231 in the thickness direction X of the wall portion may be located inside the spring, outside the spring. When there are multiple exhaust ports 231, the projections of all the multiple exhaust ports 231 in the thickness direction X of the wall portion may be located inside the spring, or surrounding the spring, or certainly, partially inside the spring and partially outside the spring in some embodiments.

The one-way valve 23 is provided with the valve body 232, the elastic member 233, and the sealing member 234. The valve body 232 is disposed on the wall portion 211, with the valve body 232 provided with the intake port 2322 communicating the mounting cavity 2321 to the interior of the housing 21 and the exhaust port 231 connecting the mounting cavity 2321 and the exhaust passage 25. By disposing both the elastic member 233 and the sealing member 234 within the mounting cavity 2321, the elastic member 233 can apply an elastic force to the sealing member 234, enabling the sealing member 234 to seal the intake port 2322 and prevent gas outside the housing 21 from entering the interior of the housing 21. When the internal pressure of the housing 21 rises, gas inside the housing 21 can act on the sealing member 234 and overcome the elastic force of the elastic member 233, enabling the sealing member 234 to open the intake port 2322, thereby allowing gas inside the housing 21 to be discharged through the one-way valve 23's unidirectional opening, so as to achieve the one-way valve 23's unidirectional exhaust function.

According to some embodiments of this application, referring to FIGs. 5, 6, 13, and 14, the valve body 232 may include a valve main body 2323 and a valve cover 2324. The valve main body 2323 is disposed on the wall portion 211, and the valve main body 2323 is provided with the intake port 2322. Along the thickness direction X of the wall portion, the valve cover 2324 is disposed at an end of the valve main body 2323 facing away from the electrode assembly 22, the valve cover 2324 and the valve main body 2323 together enclose to form the mounting cavity 2321, and the valve cover 2324 is provided with the exhaust port 231.

The wall portion 211 is provided with a mounting hole 2111, the valve main body 2323 is mounted within the mounting hole 2111, and the valve main body 2323 extends into the interior of the housing 21 along the thickness direction X of the wall portion, meaning that along the thickness direction X of the wall portion, the valve main body 2323 protrudes beyond the surface of the wall portion 211 facing towards the electrode assembly 22.

The structure for mounting the valve main body 2323 on the wall portion 211 may vary, such as the valve main body 2323 being welded to the wall surface of the mounting hole 2111 or adhered to the wall surface of the mounting hole 2111 with sealant.

For example, the intake port 2322 is disposed at an end of the valve main body 2323 close to the electrode assembly 22 in the thickness direction X of the wall portion, meaning that the intake port 2322 extends through the cavity bottom surface of the mounting cavity 2321. Correspondingly, the sealing member 234 is movably disposed within the mounting cavity 2321 along the thickness direction X of the wall portion, enabling the sealing member 234 to seal the intake port 2322 when abutting against the cavity bottom surface of the mounting cavity 2321. Certainly, in other embodiments, the intake port 2322 may be disposed on a side of the valve main body 2323 in the radial direction of the valve main body 2323, with the sealing member 234 movably disposed within the mounting cavity 2321 along the radial direction of the valve main body 2323.

For example, the exhaust port 231 is a first through hole provided on the valve cover 2324, the first through hole extending through both sides of the valve cover 2324 along the thickness direction X of the wall portion. In FIG. 13, the valve cover 2324 is provided with three exhaust ports 231, the three exhaust ports 231 being arranged around the central axis of the mounting hole 2111. Certainly, in other embodiments, the number of exhaust ports 231 provided on the valve cover 2324 may be one, two, four, or five.

As an example, when multiple exhaust ports 231 are provided on the valve cover 2324, the multiple exhaust ports 231 are arranged at equal intervals.

As an example, the multiple exhaust ports 231 are arranged at equal intervals around the center of the valve cover 2324, which facilitates smoother gas flow.

In some embodiments, referring to FIGs. 13 and 14, the valve cover 2324 is connected to the valve main body 2323, and an end of the valve main body 2323 facing away from the electrode assembly 22 is provided with a counterbore 2323a, with at least a portion of the valve cover 2324 accommodated within the counterbore 2323a. By providing the counterbore 2323a at the end of the valve main body 2323 facing away from the electrode assembly 22, with at least a portion of the valve cover 2324 accommodated within the counterbore 2323a, the one-way valve 23 of this structure reduces the space occupied by the valve body 232 in the thickness direction X of the wall portion, enhances the structural stability of the valve cover 2324 assembled on the valve main body 2323, and provides a certain degree of protection to the valve cover 2324, reducing wear or damage to the valve cover 2324.

The mounting cavity 2321 extends through the groove bottom surface of the counterbore 2323a, and the valve cover 2324 is assembled within the counterbore 2323a and abuts against the groove bottom surface of the counterbore 2323a, so that the valve cover 2324 and the valve main body 2323 together enclose to form the mounting cavity 2321.

At least a portion of the valve cover 2324 is accommodated within the counterbore 2323a, meaning that the valve cover 2324 may be entirely located within the counterbore 2323a or only partially located within the counterbore 2323a. That is, in the thickness direction X of the wall portion, the valve cover 2324 may extend out of the counterbore 2323a or may not extend out of the counterbore 2323a. For example, in FIG. 14, the valve cover 2324 is entirely located within the counterbore 2323a.

For example, the material of the valve main body 2323 may be a metal material, such as copper, iron, aluminum, steel, or aluminum alloy. Similarly, the material of the valve cover 2324 may be a metal material, such as copper, iron, aluminum, steel, or aluminum alloy. The valve main body 2323 and the valve cover 2324 may be made of the same material or different materials.

The valve body 232 of the one-way valve 23 includes the valve main body 2323 and the valve cover 2324. By connecting the valve cover 2324 to the end of the valve main body 2323 facing away from the electrode assembly 22 in the thickness direction X of the wall portion, the valve cover 2324 and the valve main body 2323 together define the mounting cavity 2321 for accommodating the elastic member 233 and the sealing member 234. The one-way valve 23 of this structure divides the valve body 232 into two parts, facilitating the assembly of the elastic member 233 and the sealing member 234 into the mounting cavity 2321, which is beneficial to reducing the assembly difficulty of the one-way valve 23.

According to some embodiments of this application, referring to FIGs. 5, 13, and 14, along the thickness direction X of the wall portion, the valve cover 2324 and the sealing member 234 are spaced apart, two ends of the elastic member 233 respectively abut against the valve cover 2324 and the sealing member 234, and the intake port 2322 is disposed on a cavity bottom surface of the mounting cavity 2321.

The valve cover 2324 faces towards the cavity bottom surface of the mounting cavity 2321, and the two ends of the elastic member 233 in the thickness direction X of the wall portion respectively abut against the valve cover 2324 and the sealing member 234, so that the elastic member 233 is compressed between the valve cover 2324 and the sealing member 234, enabling the elastic member 233 to provide an elastic force to the sealing member 234, thereby allowing the sealing member 234 to seal the intake port 2322 disposed on the cavity bottom surface of the mounting cavity 2321 under the action of the elastic force of the elastic member 233.

In some embodiments, referring to FIGs. 13 and 14, a first guide post 2324a is protrudingly provided on a side of the valve cover 2324 facing towards the sealing member 234, and a portion of the elastic member 233 is fitted around the outer side of the first guide post 2324a. By protrudingly providing the first guide post 2324a on the side of the valve cover 2324 facing towards the sealing member 234, with a portion of the elastic member 233 fitted around the outer side of the first guide post 2324a, the one-way valve 23 of this structure allows the first guide post 2324a to provide a certain degree of positioning for the elastic member 233, facilitating the assembly of the elastic member 233 and reducing the assembly difficulty of the elastic member 233. Additionally, the first guide post 2324a can provide guidance when the elastic member 233 is compressed along the thickness direction X of the wall portion, reducing radial deformation of the elastic member 233 during compression, thereby enabling stable compression of the elastic member 233 along the thickness direction X of the wall portion. This is beneficial to improving the use reliability of the elastic member 233 and reducing the risk of the sealing member 234 inadvertently opening the intake port 2322.

The elastic member 233 is a spring, with a portion of the spring fitted around the outer side of the first guide post 2324a, and an end of the spring away from the sealing member 234 abutting against the surface of the valve cover 2324 provided with the first guide post 2324a, meaning that the first guide post 2324a is inserted into the spring.

For example, the central axis of the first guide post 2324a coincides with the central axis of the mounting hole 2111, and the central axis of the elastic member 233 coincides with the central axis of the first guide post 2324a.

It should be noted that, in embodiments where multiple exhaust ports 231 are provided on the valve cover 2324, the multiple exhaust ports 231 surround the outer side of the first guide post 2324a. Certainly, in other embodiments, the exhaust port 231 may extend through the first guide post 2324a along the thickness direction X of the wall portion.

By configuring the valve cover 2324 and the sealing member 234 to be spaced apart along the thickness direction X of the wall portion, the two ends of the elastic member 233 can respectively abut against the valve cover 2324 and the sealing member 234, enabling the sealing member 234 to seal the intake port 2322 disposed on the cavity bottom surface of the mounting cavity 2321 along the thickness direction X of the wall portion under the action of the elastic member 233. In other words, the intake port 2322 is disposed at the end of the valve main body 2323 facing towards the electrode assembly 22 in the thickness direction X of the wall portion, and the sealing member 234 can move along the thickness direction X of the wall portion under the action of the elastic member 233 to seal the intake port 2322. The one-way valve 23 of this structure facilitates the elastic member 233 applying an elastic force to the sealing member 234 to allow the sealing member 234 to seal the intake port 2322 and can reduce the assembly difficulty of the elastic member 233.

According to some embodiments of this application, referring to FIG. 14, a diameter of the first guide post 2324a is denoted as D₁, an inner diameter of the elastic member 233 is denoted as D₂, satisfying 0 mm < D₂ - D₁ ≤ 5 mm.

The elastic member 233 is a spring, and the inner diameter D₂ of the elastic member 233 is the diameter of the cavity formed on the inner side of the spring.

The condition 0 mm < D₂ - D₁ ≤ 5 mm means that, when the first guide post 2324a and the elastic member 233 are coaxially arranged, the gap between the first guide post 2324a and the elastic member 233 is greater than 0 mm and less than or equal to 5 mm.

For example, the difference between the inner diameter of the elastic member 233 and the diameter of the first guide post 2324a may be 0 mm, 0.1 mm, 0.2 mm, 0.5 mm, 0.8 mm, 1 mm, 1.2 mm, 1.5 mm, 2 mm, 2.5 mm, 3 mm, 3.5 mm, 4 mm, 4.5 mm, or 5 mm.

With the difference between the inner diameter of the elastic member 233 and the diameter of the first guide post 2324a set to be greater than 0 mm and less than or equal to 5 mm, this can mitigate the inconvenience of assembling the elastic member 233 onto the first guide post 2324a caused by the difference between the inner diameter of the elastic member 233 and the diameter of the first guide post 2324a being less than or equal to 0, reducing scratching during the process of sleeving the elastic member 233 onto the first guide post 2324a. Additionally, this can mitigate the issue of an excessively large gap between the elastic member 233 and the first guide post 2324a due to an overly large difference between the inner diameter of the elastic member 233 and the diameter of the first guide post 2324a, reducing radial movement or deformation of the elastic member 233, thereby improving the uniformity of the elastic force applied by the elastic member 233 on the sealing member 234 and reducing the risk of the sealing member 234 inadvertently opening the intake port 2322.

In some embodiments, a side of the valve cover 2324 facing towards the sealing member 234 is further provided with a first limiting groove, and an end of the elastic member 233 away from the sealing member 234 is inserted into the first limiting groove.

The valve cover 2324 is provided with a first limiting groove on the side facing towards the sealing member 234, meaning that the first limiting groove is provided on the surface of the valve cover 2324 facing towards the sealing member 234 in the thickness direction X of the wall portion. In embodiments where the valve cover 2324 is protrudingly provided with a first guide post 2324a on the side facing towards the sealing member 234, the first limiting groove is provided on the surface of the valve cover 2324 provided with the first guide post 2324a.

The end of the elastic member 233 away from the sealing member 234 is inserted into the first limiting groove, meaning that the end of the elastic member 233 away from the sealing member 234 abuts against a groove bottom surface of the first limiting groove.

For example, the elastic member 233 is a spring, and correspondingly, the first limiting groove is an annular groove structure. In embodiments where the valve cover 2324 is protrudingly provided with a first guide post 2324a on the side facing towards the sealing member 234, the first limiting groove surrounds the outer side of the first guide post 2324a.

By providing the first limiting groove for inserting the elastic member 233 on the side of the valve cover 2324 facing towards the sealing member 234, the end of the elastic member 233 abutting against the valve cover 2324 can be limited, reducing relative radial sliding between the elastic member 233 and the valve cover 2324, thereby improving the uniformity of the elastic force applied by the elastic member 233 on the sealing member 234, which is beneficial to enhancing the use reliability of the elastic member 233.

In some embodiments, an end of the elastic member 233 away from the sealing member 234 is fixedly connected to the valve cover 2324.

The structure for fixedly connecting the elastic member 233 to the valve cover 2324 may vary, such as welding or adhesion.

It should be noted that, in embodiments where the valve cover 2324 is provided with a first limiting groove on the side facing towards the sealing member 234, and the end of the elastic member 233 away from the sealing member 234 is inserted into the first limiting groove, the end of the elastic member 233 away from the sealing member 234 is fixedly connected to the groove bottom surface of the first limiting groove. In embodiments where the valve cover 2324 is not provided with a first limiting groove on the side facing towards the sealing member 234, the end of the elastic member 233 away from the sealing member 234 is fixedly connected to the surface of the valve cover 2324 that it abuts against.

By fixedly connecting the end of the elastic member 233 away from the sealing member 234 to the valve cover 2324, the end of the elastic member 233 abutting against the valve cover 2324 is fixedly connected to the valve cover 2324, enhancing the stability of the elastic member 233 abutting against the valve cover 2324, further reducing relative sliding between the elastic member 233 and the valve cover 2324, and thereby further improving the uniformity of the elastic force applied by the elastic member 233 on the sealing member 234.

It should be noted that the structure of the one-way valve 23 is not limited to this. In some embodiments, the one-way valve 23 may have other structures. For example, referring to FIG. 15, FIG. 15 is a partial cross-sectional view of a battery cell 20 according to some other embodiments of this application. Along the thickness direction X of the wall portion, the mounting cavity 2321 extends through an end of the valve body 232 facing away from the electrode assembly 22 to form the exhaust port 231, and the cover member 24 faces towards the exhaust port 231.

The mounting cavity 2321 extends through the end of the valve body 232 facing away from the electrode assembly 22 to form the exhaust port 231, meaning that, in embodiments where the valve body 232 includes a valve main body 2323 and a valve cover 2324, the valve body 232 does not include the valve cover 2324, so that the mounting cavity 2321 is formed inside the valve main body 2323, and the mounting cavity 2321 extends through the end of the valve main body 2323 facing away from the electrode assembly 22 in the thickness direction X of the wall portion to form the exhaust port 231.

By configuring the mounting cavity 2321 to extend through the end of the valve body 232 facing away from the electrode assembly 22 in the thickness direction X of the wall portion, to form the exhaust port 231 at the end of the valve body 232 facing away from the electrode assembly 22, with the cover member 24 covering the exhaust port 231, the one-way valve 23 of this structure facilitates the assembly of the elastic member 233 and the sealing member 234 into the mounting cavity 2321 through the intake port 2322, which is beneficial to reducing the assembly difficulty of the one-way valve 23.

It should be noted that, in embodiments where the valve body 232 does not include the valve cover 2324, the intake port 2322 may be provided on the cavity side surface of the mounting cavity 2321, with the sealing member 234 and the elastic member 233 arranged along the radial direction of the mounting cavity 2321 to enable the sealing member 234 to seal the intake port 2322. Certainly, the intake port 2322 may be provided on the cavity bottom surface of the mounting cavity 2321, with the sealing member 234 and the elastic member 233 arranged along the thickness direction X of the wall portion to enable the sealing member 234 to seal the intake port 2322. Referring to FIG. 15, along the thickness direction X of the wall portion, the cover member 24 and the sealing member 234 are spaced apart, two ends of the elastic member 233 respectively abut against the cover member 24 and the sealing member 234, and the intake port 2322 is disposed on the cavity bottom surface of the mounting cavity 2321.

The cover member 24 faces towards the cavity bottom surface of the mounting cavity 2321, and the two ends of the elastic member 233 in the thickness direction X of the wall portion respectively abut against the cover member 24 and the sealing member 234, so that the elastic member 233 is compressed between the cover member 24 and the sealing member 234, enabling the elastic member 233 to provide an elastic force to the sealing member 234, thereby allowing the sealing member 234 to seal the intake port 2322 disposed on the cavity bottom surface of the mounting cavity 2321 under the action of the elastic force of the elastic member 233.

It should be noted that, in embodiments where the second surface 245 of the cover member 24 is provided with a second groove 2452, the end of the elastic member 233 away from the sealing member 234 abuts against the groove bottom surface of the second groove 2452.

By configuring the cover member 24 and the sealing member 234 to be spaced apart along the thickness direction X of the wall portion, the two ends of the elastic member 233 can respectively abut against the cover member 24 and the sealing member 234, enabling the sealing member 234 to seal the intake port 2322 disposed on the cavity bottom surface of the mounting cavity 2321 along the thickness direction X of the wall portion under the action of the elastic member 233. In other words, the intake port 2322 is disposed at the end of the valve main body 2323 facing towards the electrode assembly 22 in the thickness direction X of the wall portion, and the sealing member 234 can move along the thickness direction X of the wall portion under the action of the elastic member 233 to seal the intake port 2322. The one-way valve 23 of this structure facilitates the elastic member 233 applying an elastic force to the sealing member 234 to allow the sealing member 234 to seal the intake port 2322 and can reduce the assembly difficulty of the elastic member 233.

According to some embodiments, referring to FIGs. 5, 13, 14, and 16, FIG. 16 is a partial cross-sectional view of a wall portion 211 of a housing 21 of a battery cell 20 according to some embodiments of this application. The wall portion 211 has a first surface 2112 facing away from the electrode assembly 22, the first surface 2112 is provided with a mounting groove 2113, the cover member 24 being assembled within the mounting groove 2113, a groove bottom surface of the mounting groove 2113 is provided with a mounting hole 2111, the mounting hole 2111 connecting the interior of the housing 21, the valve main body 2323 being mounted within the mounting hole 2111 and protruding beyond the surface of the wall portion 211 facing towards the electrode assembly 22 along the thickness direction X of the wall portion. The mounting hole 2111 includes a first hole segment 2111a and a second hole segment 2111b, the first hole segment 2111a and the second hole segment 2111b being arranged along the thickness direction X of the wall portion, with the first hole segment 2111a located on a side of the second hole segment 2111b facing away from the electrode assembly 22, a hole diameter of the first hole segment 2111a being greater than a hole diameter of the second hole segment 2111b. The valve main body 2323 has a connection portion 2323b located within the first hole segment 2111a, the connection portion 2323b being an annular structure extending along the circumferential direction of the valve main body 2323, the connection portion 2323b being welded to the wall surface of the first hole segment 2111a to form an annular weld.

Optionally, referring to FIG. 14, the connection portion 2323b is further provided with a stress relief groove 2323c, the stress relief groove 2323c being an annular groove structure. In embodiments where the valve body 232 includes a valve main body 2323 and a valve cover 2324, the stress relief groove 2323c surrounds the outer side of the valve cover 2324. In embodiments where the valve body 232 includes only the valve main body 2323, the stress relief groove 2323c surrounds the outer side of the mounting cavity 2321. By providing the stress relief groove 2323c on the connection portion 2323b, the stress relief groove 2323c can release welding stress generated by welding the connection portion 2323b to the wall surface of the first hole segment 2111a, reducing the impact of welding stress on the weld between the wall surface of the first hole segment 2111a and the connection portion 2323b, minimizing the risk of weld cracking, and thereby reducing the risk of sealing failure at the weld.

According to some embodiments of this application, referring to FIGs. 13, 14, and 15, a second guide post 2341 is protrudingly provided on a side of the sealing member 234 facing towards the valve cover 2324 or the cover member 24, and a portion of the elastic member 233 is fitted around the outer side of the second guide post 2341.

The elastic member 233 is a spring, with a portion of the spring fitted around the outer side of the second guide post 2341, and an end of the spring away from the valve cover 2324 or the cover member 24 abutting against the surface of the sealing member 234 provided with the second guide post 2341, meaning that the second guide post 2341 is inserted into the spring.

For example, the central axis of the second guide post 2341 coincides with the central axis of the mounting hole 2111, and the central axis of the elastic member 233 coincides with the central axis of the second guide post 2341.

By protrudingly providing the second guide post 2341 on the side of the sealing member 234 facing towards the valve cover 2324, with a portion of the elastic member 233 fitted around the outer side of the second guide post 2341, the one-way valve 23 of this structure allows the second guide post 2341 to provide a certain degree of positioning for the elastic member 233, facilitating the assembly of the elastic member 233 and reducing assembly difficulty of the elastic member 233. Additionally, the second guide post 2341 can provide guidance when the elastic member 233 is compressed along the thickness direction X of the wall portion, reducing radial deformation of the elastic member 233 during compression, thereby enabling stable compression of the elastic member 233 along the thickness direction X of the wall portion. This beneficial to improving the use reliability of the elastic member 233 and reducing the risk of the sealing member 234 inadvertently opening the intake port 2322.

According to some embodiments of this application, referring to FIG. 14, a diameter of the second guide post 2341 is denoted as D₃, an inner diameter of the elastic member 233 is denoted as D₂, satisfying 0 mm < D₃ - D₁ ≤ 5 mm.

The elastic member 233 is a spring, and the inner diameter D₂ of the elastic member 233 is the diameter of the cavity formed on the inner side of the spring.

The condition 0 mm < D₃ - D₁ ≤ 5 mm means that, when the second guide post 2341 and the elastic member 233 are coaxially arranged, the gap between the second guide post 2341 and the elastic member 233 is greater than 0 mm and less than or equal to 5 mm.

For example, the difference between the inner diameter of the elastic member 233 and the diameter of the second guide post may be 0 mm, 0.1 mm, 0.2 mm, 0.5 mm, 0.8 mm, 1 mm, 1.2 mm, 1.5 mm, 2 mm, 2.5 mm, 3 mm, 3.5 mm, 4 mm, 4.5 mm, or 5 mm.

With the difference between the inner diameter of the elastic member 233 and the diameter of the second guide post 2341 set to be greater than 0 mm and less than or equal to 5 mm, this can mitigate the inconvenience of assembling the elastic member 233 onto the second guide post 2341 caused by the difference between the inner diameter of the elastic member 233 and the diameter of the second guide post 2341 being less than or equal to 0, reducing scratching during the process of sleeving the elastic member 233 onto the second guide post 2341. Additionally, this can mitigate the issue of an excessively large gap between the elastic member 233 and the second guide post 2341 due to an overly large difference between the inner diameter of the elastic member 233 and the diameter of the second guide post 2341, reducing radial movement or deformation of the elastic member 233, thereby improving the uniformity of the elastic force applied by the elastic member 233 on the sealing member 234 and reducing the risk of the sealing member 234 inadvertently opening the intake port 2322.

In some embodiments, a side of the sealing member 234 facing towards the valve cover 2324 is further provided with a second limiting groove, and an end of the elastic member 233 away from the valve cover 2324 is inserted into the second limiting groove.

The sealing member 234 is provided with a second limiting groove on the side facing towards the valve cover 2324, meaning that the second limiting groove is provided on the surface of the sealing member 234 facing towards the valve cover 2324 in the thickness direction X of the wall portion. In embodiments where the sealing member 234 is protrudingly provided with a second guide post 2341 on the side facing towards the valve cover 2324, the second limiting groove is provided on the surface of the sealing member 234 provided with the second guide post 2341.

The end of the elastic member 233 away from the valve cover 2324 is inserted into the second limiting groove, meaning that the end of the elastic member 233 away from the valve cover 2324 abuts against a groove bottom surface of the second limiting groove.

For example, the elastic member 233 is a spring, and correspondingly, the second limiting groove is an annular groove structure. In embodiments where the sealing member 234 is protrudingly provided with a second guide post 2341 on the side facing towards the valve cover 2324, the second limiting groove surrounds the outer side of the second guide post 2341.

By providing the second limiting groove for inserting the elastic member 233 on the side of the sealing member 234 facing towards the valve cover 2324, the end of the elastic member 233 abutting against the sealing member 234 can be limited, reducing relative radial sliding between the elastic member 233 and the sealing member 234, thereby improving the uniformity of the elastic force applied by the elastic member 233 on the sealing member 234, which is beneficial to enhancing the use reliability of the elastic member 233.

According to some embodiments of this application, an end of the elastic member 233 away from the valve cover 2324 is fixedly connected to the sealing member 234.

The structure for fixedly connecting the elastic member 233 to the sealing member 234 may vary, such as welding or adhesion.

It should be noted that, in embodiments where the sealing member 234 is provided with a second limiting groove on the side facing towards the valve cover 2324, and the end of the elastic member 233 away from the valve cover 2324 is inserted into the second limiting groove, the end of the elastic member 233 away from the valve cover 2324 is fixedly connected to the groove bottom surface of the second limiting groove. In embodiments where the sealing member 234 is not provided with a second limiting groove on the side facing towards the valve cover 2324, the end of the elastic member 233 away from the valve cover 2324 is fixedly connected to the surface of the sealing member 234 that it abuts against.

By fixedly connecting the end of the elastic member 233 away from the valve cover 2324 to the sealing member 234, the end of the elastic member 233 abutting against the sealing member 234 is fixedly connected to the sealing member 234, enhancing the stability of the elastic member 233 abutting against the sealing member 234, further reducing relative sliding between the elastic member 233 and the sealing member 234, and thereby further improving the uniformity of the elastic force applied by the elastic member 233 on the sealing member 234.

According to some embodiments of this application, referring to FIGs. 13, 14, and 15, the sealing member 234 may include a pressing portion 2342 and a sealing portion 2343. Along the thickness direction X of the wall portion, two ends of the elastic member 233 respectively abut against the pressing portion 2342 and the valve cover 2324 or the cover member 24, the sealing portion 2343 is connected to a side of the pressing portion 2342 facing away from the valve cover 2324 or the cover member 24, the sealing portion 2343 is configured to seal the intake port 2322.

The elastic member 233 can provide an elastic force to the pressing portion 2342, enabling the pressing portion 2342 to press against the sealing portion 2343, thereby sealing the intake port 2322 through the sealing portion 2343.

Optionally, the rigidity of the pressing portion 2342 is greater than the rigidity of the sealing portion 2343, meaning that the deformation resistance of the pressing portion 2342 is greater than that of the sealing portion 2343, enabling the pressing portion 2342 to better press the sealing portion 2343 against the cavity bottom surface of the mounting cavity 2321 to seal the intake port 2322. For example, the material of the pressing portion 2342 may be steel, iron, or aluminum. Similarly, the material of the sealing portion 2343 may be rubber, silicone, or plastic.

Optionally, the connection structure between the pressing portion 2342 and the sealing portion 2343 may vary, such as snap-fitting, bolting, or adhesion.

It should be noted that, in embodiments where the sealing member 234 is provided with a second guide post 2341, the second guide post 2341 is protrudingly provided on the surface of the pressing portion 2342 facing towards the valve cover 2324 or the cover member 24. Similarly, in embodiments where the sealing member 234 is provided with a second limiting groove on the side facing towards the valve cover 2324, the second limiting groove is provided on the surface of the pressing portion 2342 facing towards the valve cover 2324.

By configuring the sealing member 234 to include a pressing portion 2342 and a sealing portion 2343, with the pressing portion 2342 disposed on the side of the sealing portion 2343 facing towards the valve cover 2324, the sealing portion 2343 is configured to seal the intake port 2322, and the two ends of the elastic member 233 respectively abutting against the valve cover 2324 and the pressing portion 2342, the elastic member 233 can apply an elastic force to the sealing portion 2343 through the pressing portion 2342, thereby improving the uniformity of the elastic force applied by the elastic member 233 on the sealing portion 2343, which is beneficial to effectively enhancing the sealing effect of the sealing portion 2343 on the intake port 2322.

According to some embodiments of this application, referring to FIGs. 13, 14, and 15, along the thickness direction X of the wall portion, a side of the pressing portion 2342 facing towards the sealing portion 2343 is provided with a snap-fit groove 2342a, a side of the sealing portion 2343 facing towards the pressing portion 2342 is protrudingly provided with a snap-fit portion 2343a, the snap-fit portion 2343a being inserted into the snap-fit groove 2342a, and the snap-fit portion 2343a being snap-fitted with the snap-fit groove 2342a. The sealing member 234 of this structure helps to the structural stability of the sealing portion 2343 mounted on the pressing portion 2342, reducing radial sliding of the sealing portion 2343 relative to the pressing portion 2342, thereby improving the sealing effect of the sealing portion 2343 on the intake port 2322 and reducing the likelihood of the intake port 2322 being inadvertently opened.

For example, the snap-fit portion 2343a is a circular columnar structure, and correspondingly, the snap-fit groove 2342a is a circular groove.

In some embodiments, the sealing portion 2343 is adhered to the pressing portion 2342. By connecting the sealing portion 2343 and the pressing portion 2342 through adhesion, the structural stability of the sealing portion 2343 mounted on the pressing portion 2342 can be enhanced, reducing the risk of the sealing portion 2343 falling off the pressing portion 2342, thereby improving the reliability of the sealing portion 2343 in sealing the intake port 2322. Additionally, it facilitates the assembly connection between the sealing portion 2343 and the pressing portion 2342, reducing the assembly difficulty of the sealing portion 2343 and the pressing portion 2342.

In some embodiments, the material of the sealing portion 2343 includes ethylene propylene diene monomer, fluororubber, or polytetrafluoroethylene. Using ethylene propylene diene monomer, fluororubber, or polytetrafluoroethylene for the sealing portion 2343 provides the sealing portion 2343 with good corrosion resistance, effectively mitigating corrosion of the sealing portion 2343 by the electrolyte, thereby improving the service life of the sealing portion 2343 and mitigating the phenomenon of poor effects of the sealing portion 2343 in blocking the intake port 2322 caused by corrosion of the sealing portion 2343.

It should be noted that, in some embodiments, the sealing member 234 may not include the pressing portion 2342, and the sealing member 234 includes only the sealing portion 2343, with one end of the elastic member 233 directly abutting against the sealing portion 2343.

According to some embodiments of this application, referring to FIG. 14, along the thickness direction X of the wall portion, a gap between the valve cover 2324 and the sealing member 234 has a dimension denoted as L, satisfying 0 mm < L ≤ 2 mm.

The dimension of the gap between the valve cover 2324 and the sealing member 234 is denoted as L, meaning that the distance between the valve cover 2324 and the sealing member 234 in the thickness direction X of the wall portion is L.

For example, the dimension L of the gap between the valve cover 2324 and the sealing member 234 may be 0 mm, 0.1 mm, 0.2 mm, 0.3 mm, 0.4 mm, 0.5 mm, 0.6 mm, 0.7 mm, 0.8 mm, 0.9 mm, 1 mm, 1.2 mm, 1.5 mm, 1.8 mm, or 2 mm.

It should be noted that, in embodiments where the valve cover 2324 is provided with a first guide post 2324a and the sealing member 234 is provided with a second guide post 2341, L is the size of the gap formed between the first guide post 2324a and the second guide post 2341 in the thickness direction X of the wall portion. In embodiments where the valve cover 2324 is provided with a first guide post 2324a and the sealing member 234 is not provided with a second guide post 2341, L is the size of the gap formed between the first guide post 2324a and the surface of the sealing member 234 facing towards the valve cover 2324 in the thickness direction X of the wall portion. In embodiments where the valve cover 2324 is not provided with a first guide post 2324a and the sealing member 234 is provided with a second guide post 2341, L is the size of the gap formed between the second guide post 2341 and the surface of the valve cover 2324 facing towards the sealing member 234 in the thickness direction X of the wall portion.

By setting the size of the gap between the valve cover 2324 and the sealing member 234 in the thickness direction X of the wall portion to be greater than 0 mm and less than or equal to 2 mm, this can reduce the obstruction of the valve cover 2324 on the sealing member 234, providing space between the valve cover 2324 and the sealing member 234 for the sealing member 234 to move along the thickness direction X of the wall portion, enabling the sealing member 234 to open the intake port 2322 for gas discharge when the sealing member 234 is pushed by gas inside the housing 21. Additionally, it mitigates the issue of excessive space occupied by the one-way valve 23 in the thickness direction X of the wall portion due to an overly large gap between the valve cover 2324 and the sealing member 234, thereby improving the space utilization rate of the battery cell 20.

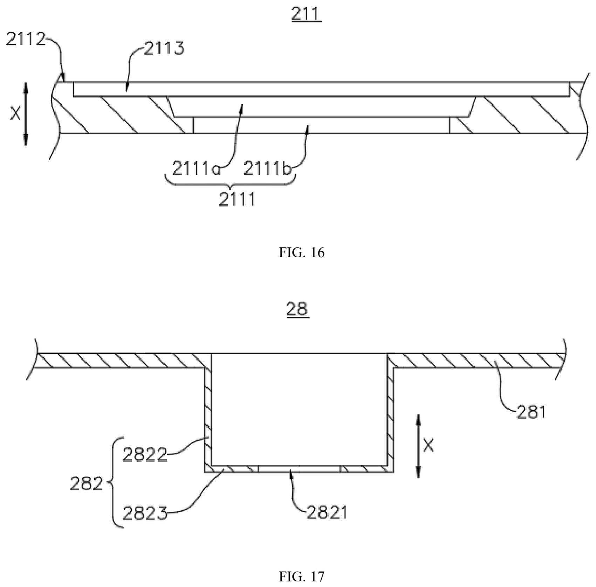

In some embodiments, referring to FIGs. 4 and 5, and further referring to FIG. 17, FIG. 17 is a partial cross-sectional view of an insulating member 28 according to some embodiments of this application. The battery cell 20 may further include an insulating member 28, and the insulating member 28 is disposed on a side of the wall portion 211 facing towards the electrode assembly 22. Along the thickness direction X of the wall portion, the valve body 232 of the one-way valve 23 protrudes beyond the surface of the wall portion 211 facing towards the electrode assembly 22, the insulating member 28 includes a main body portion 281 and a receiving portion 282, the main body portion 281 is disposed on the side of the wall portion 211 facing towards the electrode assembly 22, the receiving portion 282 is connected to the main body portion 281, and a portion of the valve body 232 of the one-way valve 23 protruding beyond the surface of the wall portion 211 facing towards the electrode assembly 22 is accommodated within the receiving portion 282.

The insulating member 28 is disposed on the side of the wall portion 211 facing towards the electrode assembly 22, and the insulating member 28 serves to separate the wall portion 211 from the electrode assembly 22, providing insulation between the wall portion 211 and the electrode assembly 22.

For example, the material of the insulating member 28 may be rubber, silicone, or plastic.

The portion of the valve body 232 of the one-way valve 23 protruding beyond the surface of the wall portion 211 facing towards the electrode assembly 22 is accommodated within the receiving portion 282, meaning that the receiving portion 282 is formed at a position of the insulating member 28 corresponding to the one-way valve 23, and the receiving portion 282 covers the outer side of the portion of the valve body 232 of the one-way valve 23 protruding beyond the surface of the wall portion 211 facing towards the electrode assembly 22.

Optionally, the main body portion 281 and the receiving portion 282 of the insulating member 28 may be an integral structure or a separate structure. When the main body portion 281 and the receiving portion 282 are an integral structure, the main body portion 281 and the receiving portion 282 may be integrally formed by injection molding or milling. When the main body portion 281 and the receiving portion 282 are a separate structure, the receiving portion 282 may be connected to the main body portion 281 by adhesion or snap-fitting. For example, in FIG. 17, the main body portion 281 and the receiving portion 282 are an integral structure.

In some embodiments, referring to FIGs. 5 and 17, the receiving portion 282 is provided with a second through hole 2821, and the second through hole 2821 is connected to the intake port 2322 provided on the valve body 232.

The receiving portion 282 is provided with a second through hole 2821, and the second through hole 2821 extends through the receiving portion 282, enabling the second through hole 2821 to communicate the interior of the receiving portion 282 to the interior of the housing 21, so that the intake port 2322 of the valve body 232 can communicate with the interior of the housing 21 through the second through hole 2821.

By providing the second through hole 2821 on the receiving portion 282, the second through hole 2821 can communicate the interior of the housing 21 to the interior of the receiving portion 282, enabling the intake port 2322 of the valve body 232 of the one-way valve 23 to communicate with the interior of the housing 21 through the second through hole 2821. This allows gas inside the housing 21 to enter the receiving portion 282 through the second through hole 2821 and then be discharged through the one-way valve 23 to the exterior of the housing 21. This eliminates the need for gas to pass through a gap between the main body portion 281 and the wall portion 211 to enter the receiving portion 282 before being discharged through the one-way valve 23, improving the smoothness of gas discharge from inside the housing 21 through the one-way valve 23.

In some embodiments, referring to FIGs. 5 and 17, along the thickness direction X of the wall portion, the intake port 2322 is disposed at an end of the valve body 232 facing towards the electrode assembly 22. The receiving portion 282 includes a first wall 2822 and a second wall 2823, the first wall 2822 surrounds the valve body 232, one end of the first wall 2822 is connected to the main body portion 281 along the thickness direction X of the wall portion, the second wall 2823 is connected to an end of the first wall 2822 away from the main body portion 281, and the second through hole 2821 is provided on the second wall 2823.

The first wall 2822 surrounds the valve body 232, meaning that the first wall 2822 of the receiving portion 282 is an annular structure surrounding the valve body 232.

One end of the first wall 2822 is connected to the main body portion 281, and the second wall 2823 is connected to the end of the first wall 2822 away from the main body portion 281, meaning that the second wall 2823 is connected to the main body portion 281 through the first wall 2822, and the second wall 2823 and the first wall 2822 together enclose to form the receiving portion 282 for accommodating a portion of the valve body 232, with the second wall 2823 being a wall of the receiving portion 282 facing towards the intake port 2322.

The second through hole 2821 is provided on the second wall 2823, meaning that the second through hole 2821 is provided on an end of the receiving portion 282 facing towards the electrode assembly 22. Certainly, in other embodiments, the second through hole 2821 may be provided on the first wall 2822, meaning that the second through hole 2821 is provided on a side of the receiving portion 282 in the radial direction of the receiving portion 282.

The receiving portion 282 is provided with a first wall 2822 and a second wall 2823 connected to each other, the first wall 2822 surrounding the valve body 232, and the second wall 2823 being located at an end of the valve body 232 facing towards the electrode assembly 22 in the thickness direction X of the wall portion, so that the first wall 2822 and the second wall 2823 together enclose to form the receiving portion 282 for accommodating the portion of the valve body 232 extending into the interior of the housing 21. Providing the second through hole 2821 of the receiving portion 282 on the first wall 2822 increases the path for gas to enter the intake port 2322 of the valve body 232 from the second through hole 2821, mitigating the overflow of electrolyte with the gas. Providing the second through hole 2821 of the receiving portion 282 on the second wall 2823 facilitates the corresponding arrangement of the intake port 2322 and the second through hole 2821, enhancing the smoothness of gas discharge from inside the housing 21 through the one-way valve 23.

According to some embodiments of this application, a material of the cover member 24 is the same as a material of the wall portion 211.

For example, the material of the cover member 24 and the material of the wall portion 211 may both be copper, iron, aluminum, steel, or aluminum alloy.

Configuring the cover member 24 and the wall portion 211 to be made of the same material facilitates the assembly of the cover member 24 and the wall portion 211 made of the same material, which is beneficial to reducing the assembly difficulty of disposing the cover member 24 on the wall portion 211; and additionally, can allow the cover member 24 and the wall portion 211 to have the same appearance, which is beneficial to enhancing the aesthetic appearance of the battery cell 20.

According to some embodiments of this application, referring to FIGs. 3 and 4, the housing 21 may include a housing body 212 and an end cap 213. A receiving cavity with an opening 2121 is formed inside the housing body 212, and the receiving cavity is configured to accommodate the electrode assembly 22. The end cap 213 closes the opening 2121, and the end cap 213 is the wall portion 211.

The end cap 213 is the wall portion 211, meaning that the one-way valve 23 is disposed on the end cap 213.

It should be noted that the structure of the battery cell 20 is not limited to this. In some embodiments, the battery cell 20 may have other structures, such as the housing body 212 including the wall portion 211, meaning that the one-way valve 23 is mounted on one wall of the housing body 212. The one-way valve 23 may be mounted on the bottom wall of the housing body 212 opposite the end cap 213 or on a side wall of the housing body 212 adjacent to and connected with the end cap 213.

By configuring the wall portion 211 of the housing 21 as the end cap 213 of the housing 21 that closes the opening 2121 of the housing body 212, the battery cell 20 of this structure facilitates the installation of the one-way valve 23 and the cover member 24 on the end cap 213, which is beneficial to reducing the assembly difficulty of the battery cell 20 and improving the production efficiency of the battery cell 20. Similarly, by configuring the wall portion 211 of the housing 21 as one wall of the housing body 212, the battery cell 20 of this structure can reduce the impact of stresses generated by the connection between the end cap 213 and the housing body 212 on the one-way valve 23, mitigating phenomena such as damage to the one-way valve 23, thereby enhancing the use stability and service life of the battery cell 20.

According to some embodiments of this application, referring to FIGs. 3 and 4, the battery cell 20 further includes a pressure relief mechanism 27, the pressure relief mechanism 27 is disposed on the housing 21, the pressure relief mechanism 27 is configured to actuate and release internal pressure of the battery cell 20 during thermal runaway of the battery cell 20, and an actuation pressure of the pressure relief mechanism 27 is greater than an opening pressure of the one-way valve 23.

The pressure relief mechanism 27 is disposed on the housing 21, which may be on the end cap 213 or the housing body 212. For example, in FIG. 4, the pressure relief mechanism 27 is disposed on the end cap 213.

The pressure relief mechanism 27 is configured to actuate and release internal pressure of the battery cell 20 during thermal runaway of the battery cell 20, meaning that when thermal runaway occurs inside the battery cell 20, the pressure relief mechanism 27 can actuate and open to release gas and the like generated due to thermal runaway inside the battery cell 20.

The actuation pressure of the pressure relief mechanism 27 is greater than the opening pressure of the one-way valve 23, meaning that the pressure required for the gas inside the housing 21 to actuate the pressure relief mechanism 27 is greater than the pressure required for the gas inside the housing 21 to open the one-way valve 23. It should be noted that, during thermal runaway of the battery cell 20, the gas inside the housing 21 of the battery cell 20 rapidly increases, enabling the actuation of the pressure relief mechanism 27 for pressure relief. During normal use of the battery cell 20, when reaching a threshold, the gas generated inside the housing 21 can open the one-way valve 23 but cannot open the pressure relief mechanism 27.

Optionally, the pressure relief mechanism 27 may be integrally formed with the housing 21 or separately provided. If the pressure relief mechanism 27 is integrally formed with the housing 21, the pressure relief mechanism 27 may be a region of the housing 21 with a weakened structure, such as a region with a scored groove on the housing 21. If the pressure relief mechanism 27 may be separately provided from the housing 21, the pressure relief mechanism 27 may be connected to the housing 21 by welding, hot melting, injection molding, or adhesion. For example, in FIG. 4, the pressure relief mechanism 27 is separately provided from the housing 21 and the pressure relief mechanism 27 is disposed on the end cap 213 of the housing 21. The pressure relief mechanism 27 may be a pressure relief component such as an explosion-proof valve, explosion-proof disc, pressure relief valve, or safety valve.

For example, in FIG. 4, the electrode terminals 26 and the pressure relief mechanism 27 are both disposed on the end cap 213. Certainly, in other embodiments, the electrode terminals 26 and the pressure relief mechanism 27 may be disposed on different walls of the housing 21, for example, the pressure relief mechanism 27 may be disposed on the housing body 212, and the electrode terminals 26 may be disposed on the end cap 213.

By setting the opening pressure of the one-way valve 23 for exhaust to be less than the actuation pressure of the pressure relief mechanism 27 for pressure relief, gas generated inside the housing 21 during normal use of the battery cell 20 can be discharged to the exterior of the housing 21 through the one-way valve 23, mitigating the phenomenon that the pressure relief mechanism 27 actuates prematurely to release pressure before thermal runaway of the battery cell 20 caused by rising internal gas pressure in the battery cell 20, thereby effectively enhancing the use stability of the battery cell 20 and improving the service life and use reliability of the battery cell 20.

In some embodiments, the one-way valve 23 and the pressure relief mechanism 27 may be disposed on the same wall of the housing 21. For example, both the one-way valve 23 and the pressure relief mechanism 27 are disposed on the end cap 213.

In some embodiments, the one-way valve 23 and the pressure relief mechanism 27 may be disposed on different walls of the housing 21. For example, the one-way valve 23 is disposed on the end cap 213, and the pressure relief mechanism 27 is disposed on the housing body 212.

In some embodiments, an exhaust rate of the one-way valve 23 is less than an exhaust rate of the pressure relief mechanism 27.

Setting the exhaust rate of the one-way valve 23 to be less than the exhaust rate of the pressure relief mechanism 27 can mitigate the phenomenon that excessively rapid exhaust through the one-way valve 23 prevents the pressure relief mechanism 27 from actuating and opening during thermal runaway of the battery cell 20, allowing the pressure relief mechanism 27 to actuate and stably release internal pressure of the battery cell 20 during thermal runaway of the battery cell 20, thereby reducing the risk of fire or explosion in the battery cell 20 during thermal runaway.

In some embodiments, the battery cell 20 is an alkali metal battery, such as a sodium metal battery or a lithium metal battery. The use of the one-way valve 23 with an alkali metal battery allows timely discharge of gas generated during normal operation of the alkali metal battery, improving the service life of the alkali metal battery.

According to some embodiments of this application, this application further provides a battery 100, and the battery 100 includes the battery cell 20 described in any one of the above solutions.

Referring to FIG. 2, the battery 100 may further include a box 10, with the battery cell 20 accommodated within the box 10. In some embodiments, the box 10 may include a first box body 11 and a second box body 12, the first box body 11 and the second box body 12 covering each other, together defining an assembly space for accommodating the battery cell 20.

Optionally, in FIG. 2, the second box body 12 may be a hollow structure with one open end, and the first box body 11 may be a plate-like structure, covering the open side of the second box body 12, so that the first box body 11 and the second box body 12 together define the assembly space. Certainly, the structure of the box 10 is not limited to this. In other embodiments, the first box body 11 and the second box body 12 may both be hollow structures with one open side, with the open side of the first box body 11 covering the open side of the second box body 12.

Certainly, the box 10 formed by the first box body 11 and the second box body 12 may have various shapes, such as a cylinder or a cuboid. For example, in FIG. 2, the box 10 is a cuboid structure.

In some embodiments, the battery cell 20 accommodated in the box 10 may be one or more. For example, in FIG. 2, multiple battery cells 20 are disposed in the box 10 of the battery 100, and the multiple battery cells 20 may be connected in series, parallel, or a combination thereof, where the combination refers to a mix of series and parallel connections among the multiple battery cells 20. The multiple battery cells 20 may be directly connected in series, parallel, or a combination thereof, and an integral unit formed by the multiple battery cells 20 are accommodated in the box 10. Certainly, the battery 100 may include multiple battery cells 20 first connected in series, parallel, or a combination thereof to form battery modules, and the multiple battery modules are then connected in series, parallel, or a combination thereof to form an integral unit accommodated in the box 10.

The battery 100 may further include other structures. For example, the battery 100 may further include a busbar component, and busbar component connects multiple battery cells 20 to achieve electrical connection between the multiple battery cells 20.

It should be noted that, in some embodiments, the battery 100 may not be provided with a box 10, and the battery 100 includes multiple battery cells 20. The battery 100 formed by the multiple battery cells 20 are directly assembled onto an electric apparatus to provide electrical energy to the electric apparatus through the multiple battery cells 20. In other words, the box 10 may be part of the electric apparatus. The electric apparatus as a vehicle 1000 is used as an example. The box 10 may be part of the chassis structure of the vehicle 1000. For example, a portion of the box 10 may form at least part of the vehicle 1000's floor, or a portion of the box 10 may form at least part of the vehicle 1000's crossbeams and longitudinal beams.

According to some embodiments of this application, this application further provides an electric apparatus. The electric apparatus includes the battery cell 20 described in any one of the above solutions, and the battery cell 20 is configured to provide electrical energy to the electric apparatus.

The electric apparatus may be any one of the devices or systems described above that use the battery cell 20.

According to some embodiments of this application, referring to FIGs. 3 to 9 and FIGs. 12 to 14, this application provides a battery cell 20. The battery cell 20 includes a housing 21, an electrode assembly 22, a one-way valve 23, and a cover member 24. The housing 21 has a wall portion 211, and the housing 21 includes a housing body 212 and an end cap 213. A receiving cavity with an opening 2121 is formed in an interior of the housing body 212, and the electrode assembly 22 is accommodated in the receiving cavity. The end cap 213 closes the opening 2121, and the end cap 213 is the wall portion 211. Along a thickness direction X of the wall portion, the wall portion 211 has a first surface 2112 facing away from the electrode assembly 22, the first surface 2112 is provided with a mounting groove 2113, and a groove bottom surface of the mounting groove 2113 is provided with a mounting hole 2111. The one-way valve 23 is mounted within the mounting hole 2111 and protrudes beyond a surface of the wall portion 211 facing towards the electrode assembly 22. The one-way valve 23 is configured to discharge gas from inside the housing 21. The one-way valve 23 includes a valve body 232, an elastic member 233, and a sealing member 234. The valve body 232 is disposed on the wall portion 211, and a mounting cavity 2321 is formed in an interior of the valve body 232. The valve body 232 is provided with an intake port 2322 and an exhaust port 231, the intake port 2322 is configured to communicate the mounting cavity 2321 to the interior of the housing 21, and the exhaust port 231 is configured to communicate the mounting cavity 2321 to the exhaust passage 25. The elastic member 233 is disposed within the mounting cavity 2321, the sealing member 234 is movably disposed within the mounting cavity 2321, and the sealing member 234 is configured to seal the intake port 2322 under the action of the elastic member 233 and to open the intake port 2322 under the action of gas inside the housing 21. The valve body 232 includes a valve main body 2323 and a valve cover 2324. The valve main body 2323 is mounted within the mounting hole 2111, and an end of the valve main body 2323 facing towards the electrode assembly 22 is provided with the intake port 2322. Along the thickness direction X of the wall portion, the valve cover 2324 is connected to an end of the valve main body 2323 facing away from the electrode assembly 22, and the valve cover 2324 and the valve main body 2323 together enclose to form the mounting cavity 2321. The valve cover 2324 is provided with the exhaust port 231, the valve cover 2324 and the sealing member 234 are spaced apart, and two ends of the elastic member 233 respectively abut against the valve cover 2324 and the sealing member 234. The intake port 2322 is disposed on a cavity bottom surface of the mounting cavity 2321. The cover member 24 is mounted within the mounting groove 2113, and the material of the cover member 24 is the same as the material of the wall portion 211. Along the thickness direction X of the wall portion, the cover member 24 is located on a side of the one-way valve 23 facing away from the electrode assembly 22 and the cover member 24 covers the one-way valve 23. An exhaust passage 25 is formed between the cover member 24 and the wall portion 211, and the exhaust passage 25 communicates the exhaust port 231 to the exterior of the housing 21. The exhaust passage 25 includes a first exhaust gap 251 and a second exhaust gap 252, and the first exhaust gap 251 is formed between the cover member 24 and a groove side surface of the mounting groove 2113. The cover member 24 and the mounting groove 2113 have a rectangular cross-section perpendicular to the thickness direction X of the wall portion, an outer peripheral surface of the cover member 24 includes four first corner surfaces 241 and four first side surfaces 242, and each two adjacent first side surfaces 242 are connected by one first corner surface 241. the groove bottom surface of the mounting groove 2113 includes four second corner surfaces 2113a and four second side surfaces 2113b, and each two adjacent second side surfaces 2113b are connected by one second corner surface 2113a. Each first side surface 242 abuts against and is welded to a corresponding second side surface 2113b, and one first exhaust gap 251 is formed between each first corner surface 241 and a corresponding second corner surface 2113a. The first corner surface 241 and the second corner surface 2113a are both arcuate surfaces, and a radius of the first corner surface 241 is greater than a radius of the second corner surface 2113a. Along the thickness direction X of the wall portion, the cover member 24 has a second surface 245 facing towards the one-way valve 23 and a third surface 246 facing away from the one-way valve 23, the second surface 245 overlaps the groove bottom surface of the mounting groove 2113, and the third surface 246 is flush with the first surface 2112. The second surface 245 is provided with four first grooves 2451, and each first groove 2451 extends along a radial direction of the cover member 24 and extends through one first corner surface 241. The second exhaust gap 252 is formed between a groove bottom surface of the first groove 2451 and the groove bottom surface of the mounting groove 2113. The second surface 245 is further provided with a second groove 2452, the plurality of first grooves 2451 are disposed around the second groove 2452 and communicate with the second groove 2452, and the second groove 2452 communicates with the exhaust port 231. Along the thickness direction X of the wall portion, the exhaust port 231 is disposed facing towards the second groove 2452, and a projection of the exhaust port 231 is located within the second groove 2452.

It should be noted that, in the absence of conflict, the embodiments and features in the embodiments of this application may be combined with each other.

The above are merely preferred embodiments of this application and are not intended to limit this application. For those skilled in the art, various modifications and variations can be made to this application. Any modifications, equivalent substitutions, improvements, and the like, made within the spirit and principles of this application shall be included within the protection scope of this application.

## Claims

1. A battery cell comprising:
a housing having a wall portion;
an electrode assembly accommodated within the housing;
a one-way valve disposed on the wall portion, wherein the one-way valve has an exhaust port, and the exhaust port is configured to discharge gas from inside the housing; and
a cover member mounted on the wall portion, wherein along a thickness direction of the wall portion, the cover member is located on a side of the one-way valve facing away from the electrode assembly, and the cover member covers the one-way valve, wherein an exhaust passage is formed between the cover member and the wall portion, and the exhaust passage communicates the exhaust port to an exterior of the housing.

2. The battery cell according to claim 1, wherein along the thickness direction of the wall portion, the wall portion has a first surface facing away from the electrode assembly, the first surface is provided with a mounting groove, a groove bottom surface of the mounting groove is provided with a mounting hole, at least a portion of the one-way valve is disposed within the mounting hole, and at least a portion of the cover member is accommodated within the mounting groove.

3. The battery cell according to claim 2, wherein the exhaust passage comprises a first exhaust gap, the first exhaust gap is formed between the cover member and a groove side surface of the mounting groove, and the first exhaust gap is configured to connect the exhaust port and the exterior of the housing.

4. The battery cell according to claim 3, wherein an outer peripheral surface of the cover member comprises a first corner surface and at least two first side surfaces, and the first corner surface connects two adjacent first side surfaces; and
the groove side surface of the mounting groove comprises a second corner surface and at least two second side surfaces, the second corner surface connects two adjacent second side surfaces, each second side surface is connected to one first side surface, and the first exhaust gap is formed between the second corner surface and the first corner surface.

5. The battery cell according to claim 4, wherein the first corner surface and the second corner surface are both arcuate surfaces, and a radius of the first corner surface is greater than a radius of the second corner surface.

6. The battery cell according to claim 4 or 5, wherein the first side surface is welded to the second side surface.

7. The battery cell according to any one of claims 4 to 6, wherein a cross-section of the cover member perpendicular to the thickness direction of the wall portion is rectangular, the outer peripheral surface of the cover member comprises four first side surfaces and four first corner surfaces, and the first exhaust gap is formed at at least one of the first corner surfaces.

8. The battery cell according to claim 3, wherein the outer peripheral surface of the cover member is provided with a groove, and the first exhaust gap is formed between a groove bottom surface of the groove and the groove side surface of the mounting groove.

9. The battery cell according to claim 8, wherein a region of the outer peripheral surface of the cover member not provided with the groove is welded to the groove side surface of the mounting groove.

10. The battery cell according to claim 3, wherein the outer peripheral surface of the cover member is provided with a plurality of protrusions, the protrusions are spaced apart along a circumferential direction of the cover member, the protrusions abut against the groove side surface of the mounting groove, and the first exhaust gap is formed between a region of the outer peripheral surface of the cover member not provided with the protrusions and the groove side surface of the mounting groove.

11. The battery cell according to claim 10, wherein the protrusions are in interference fit with the groove side surface of the mounting groove.

12. The battery cell according to any one of claims 3 to 11, wherein the exhaust passage further comprises a second exhaust gap, the second exhaust gap is formed between the cover member and the groove bottom surface of the mounting groove, and the second exhaust gap communicates the first exhaust gap to the exhaust port.

13. The battery cell according to claim 12, wherein along the thickness direction of the wall portion, the cover member has a second surface facing towards the one-way valve, the second surface overlaps the groove bottom surface of the mounting groove, the second surface is provided with a first groove, and the second exhaust gap is formed between a groove bottom surface of the first groove and the groove bottom surface of the mounting groove.

14. The battery cell according to claim 13, wherein a plurality of first exhaust gaps are formed between the cover member and the groove side surface of the mounting groove, the plurality of first exhaust gaps are spaced apart along a circumferential direction of the cover member, the second surface is provided with a plurality of first grooves, and each first exhaust gap is connected to one first groove.

15. The battery cell according to claim 14, wherein the second surface is further provided with a second groove, the plurality of first grooves are disposed around the second groove and communicate with the second groove, and the second groove communicates with the exhaust port.

16. The battery cell according to claim 15, wherein along the thickness direction of the wall portion, the exhaust port is disposed at an end of the one-way valve facing away from the electrode assembly, the exhaust port is disposed facing towards the second groove, and a projection of the exhaust port is located within the second groove.

17. The battery cell according to any one of claims 2 to 16, wherein along the thickness direction of the wall portion, the cover member does not extend beyond the first surface.

18. The battery cell according to claim 17, wherein the cover member has a third surface facing away from the one-way valve, the third surface being flush with the first surface.

19. The battery cell according to any one of claims 2 to 18, wherein along the thickness direction of the wall portion, the one-way valve does not extend beyond the groove bottom surface of the mounting groove.

20. The battery cell according to any one of claims 1 to 19, wherein the cover member is fixedly connected to the wall portion.

21. The battery cell according to any one of claims 1 to 20, wherein the one-way valve comprises:
a valve body disposed on the wall portion, wherein a mounting cavity is formed in an interior of the valve body, the valve body is provided with an intake port and the exhaust port, the intake port is configured to communicate the mounting cavity to an interior of the housing, and the exhaust port is configured to communicate the mounting cavity to the exhaust passage;
an elastic member disposed within the mounting cavity; and
a sealing member movably disposed within the mounting cavity, wherein the sealing member is configured to seal the intake port under the action of the elastic member and to open the intake port under the action of gas inside the housing.

22. The battery cell according to claim 21, wherein the valve body comprises:
a valve main body disposed on the wall portion, wherein the valve main body is provided with the intake port; and
a valve cover, wherein along the thickness direction of the wall portion, the valve cover is disposed at an end of the valve main body facing away from the electrode assembly, the valve cover and the valve main body together enclose to form the mounting cavity, and the valve cover is provided with the exhaust port.

23. The battery cell according to claim 22, wherein along the thickness direction of the wall portion, the valve cover and the sealing member are spaced apart, two ends of the elastic member respectively abut against the valve cover and the sealing member, and the intake port is disposed on a cavity bottom surface of the mounting cavity.

24. The battery cell according to claim 21, wherein along the thickness direction of the wall portion, the mounting cavity extends through an end of the valve body facing away from the electrode assembly to form the exhaust port, and the cover member faces towards the exhaust port.

25. The battery cell according to claim 24, wherein along the thickness direction of the wall portion, the cover member and the sealing member are spaced apart, two ends of the elastic member respectively abut against the cover member and the sealing member, and the intake port is disposed on a cavity bottom surface of the mounting cavity.

26. The battery cell according to any one of claims 1 to 25, wherein a material of the cover member is the same as a material of the wall portion.

27. The battery cell according to any one of claims 1 to 26, wherein the housing comprises:
a housing body, wherein a receiving cavity with an opening is formed therein, and the receiving cavity is configured to accommodate the electrode assembly; and
an end cap closing the opening;
wherein the end cap is the wall portion; or
the housing body comprises the wall portion.

28. A battery comprising the battery cell according to any one of claims 1 to 27.

29. An electric apparatus comprising the battery cell according to any one of claims 1 to 27, wherein the battery cell is configured to provide electrical energy.
